# EUROPEAN PATENT APPLICATION

(11) **EP 4 325 389 A1**
(43) Date of publication of application: **21.02.2024**
(21) Application number: 22788200.8
(22) Date of filing: 14.04.2022
(51) Int. Cl.: G06F 30/18, G06F 30/20, G06Q 50/04, G06F 113/14

(54) **PROGRAM, METHOD, AND SYSTEM**

(30) Priority: 15.04.2021 JP 2021069385
(71) Applicant: Plantstream Inc., Tokyo 104-0032 (JP)
(72) Inventor: SAKAI Fumitaka, Tokyo 104-0032 (JP); ODA Takeshi, Tokyo 104-0032 (JP); NARUE Seitaro, Yokohama-shi, Kanagawa 220-8765 (JP); SAKAI Fumiaki, Yokohama-shi, Kanagawa 220-8765 (JP)
(74) Representative: AWA Sweden AB
(86) International application number: PCT/JP2022/017785
(87) International publication number: WO 2022/220277

(57) **Abstract**

A program of the present disclosure causes a processor to execute: a step of receiving, from a user, an operation to arrange a first object having a start point and a second object having an end point in a virtual space; a step of setting a plurality of tentative routes connecting the start point and the end point along coordinate axes of the virtual space; a step of detecting whether or not there is interference with an obstacle for each of the set tentative routes; and a step of selecting an optimum route with a lowest cost from the tentative routes for which no interference has been detected.

## Description

### TECHNICAL FIELD

The present disclosure relates to a program, a method, and a system.

### BACKGROUND

In order to construct a large-scale facility such as a chemical plant, various facilities are appropriately arranged, instruments are arranged, the instruments are connected to each other, and piping for supplying various fluids is routed. Piping routing performed at the plant design phase requires consideration of various factors such as requirements based on the positional relationship of instruments constituting the plant, conditions for the piping size selected based on the power supplied to each instrument, and maintainability, and requires a huge amount of work. In order to support such work, a design tool such as CAD is used to perform various types of design such as arrangement of various instruments and routing of piping.

Patent Literature 1 discloses a technique of a piping route creation apparatus used in the plant design phase. In this technique, in order to improve the efficiency of the process of automatically determining a piping route, the position of the piping route is adjusted using an alignment guide which is a target position of the piping, a plurality of piping routes are aligned, interference between pipings is avoided, and the interval between pipings is made constant.

### CITATION LIST

### PATENT LITERATURE

Patent Literature 1: Japanese Unexamined Patent Application Publication No. 2019-106141

### SUMMARY

### TECHNICAL PROBLEM

However, the system described in Patent Literature 1 requires position adjustment using the alignment guide to avoid interference, which makes the operation complicated.

Accordingly, an object of the present disclosure is to provide a system capable of routing piping while avoiding interference between pipings through an extremely simple operation.

### SOLUTION TO PROBLEM

A program of the present disclosure causes a processor to execute: a step of receiving, from a user, an operation to arrange a first object having a start point and a second object having an end point in a virtual space; a step of setting a plurality of tentative routes connecting the start point and the end point along coordinate axes of the virtual space; a step of detecting whether or not there is interference with an obstacle for each of the set tentative routes; and a step of selecting an optimum route with a lowest cost from tentative routes for which no interference has been detected.

### ADVANTAGEOUS EFFECTS OF INVENTION

According to the present disclosure, piping can be routed through an extremely simple operation while avoiding interference between pipings.

### BRIEF DESCRIPTION OF THE DRAWINGS

FIG. 1 is a diagram showing an overall configuration of a piping routing system 1.
FIG. 2 is a block diagram showing a functional configuration of a terminal apparatus constituting the piping routing system 1.
FIG. 3 is a diagram showing a functional configuration of a server constituting the piping routing system 1.
FIG. 4 is a diagram showing an example data structure of an instrument database stored in the server.
FIG. 5 is a diagram showing an example data structure of a design space database stored in the server.
FIG. 6 is a diagram showing types of instruments handled by the piping routing system 1.
FIG. 7 is a diagram showing an example data structure of a piping information database 2023 stored in the server.
FIG. 8 is a diagram showing an example data structure of a design parameter database 2024 stored in the server.
FIG. 9 is a diagram showing an example data structure of a rack position information database stored in the server.
FIG. 10 is a diagram showing an example data structure of an instrument position information database stored in the server.
FIG. 11 is a diagram showing entire piping routing processing by the piping routing system 1.
FIG. 12 is a diagram showing an example operation screen in a state where racks and instruments are arranged in a three-dimensional space.
FIG. 13 is a diagram showing an example operation screen for designating a layer and an area in which piping is to be laid.
FIG. 14 is a diagram showing an example operation screen of the terminal apparatus 10 when a piping path has been set.
FIG. 15 is a diagram showing details of a piping routing process.
FIG. 16 is a diagram showing a process of determining whether or not a rack is required.
FIG. 17 is a diagram showing a process of identifying a piping path.
FIG. 18 is a diagram showing a process of determining a routing method based on an attribute of an instrument.
FIG. 19 is a diagram showing a process of determining a routing method based on a positional relationship of an instrument.
FIG. 20 is a diagram illustrating various routing methods.
FIG. 21 is a diagram showing a state of various instruments routed by various routing methods.
FIG. 22 is a diagram showing a routing execution process.
FIG. 23 is a diagram illustrating alternative routes generated by a routing module.
FIG. 24 is a diagram illustrating an alternative route generated by the routing module in a two-dimensional path.
FIG. 25 is a diagram illustrating an alternative route generated by the routing module in a three-dimensional path.
FIG. 26 is an enlarged view of an alternative route shown in FIG. 23.
FIG. 27 is a diagram illustrating a modified route generated by the routing module.
FIG. 28 is a diagram showing an example operation screen of the terminal apparatus when piping routing has been performed.
FIG. 29 is a diagram showing appearances of a main rack and a subrack in a three-dimensional space.
FIG. 30 is a diagram showing an appearance of a structure in a three-dimensional space.
FIG. 31 is a diagram showing an appearance of a tower in a three-dimensional space.
FIG. 32 is a diagram illustrating an alternative route according to a modification.
FIG. 33 is a diagram showing an alternative route creation process according to the modification.
FIG. 34 is a diagram showing another example of the alternative route according to the modification.

### DETAILED DESCRIPTION

Hereinafter, embodiments of the present disclosure will be described with reference to the drawings. In the following description, identical parts are denoted by the same reference numeral. Their names and functions are also the same. Therefore, their detailed descriptions will not be repeated.

### < Overview>

An overview of piping routing in plant design and a piping routing system 1 according to the present disclosure will be described below. This piping routing system 1 is a system for designing piping for supplying various fluids to a group of facilities to produce chemical products through various production processes by chemical reactions such as a liquefied natural gas (LNG) plant and a petrochemical plant.

Taking an LNG plant as an example, the facilities arranged in the plant include an acid gas removal facility for removing an acid gas (H₂S, CO₂, organic sulfur, etc.) contained in a raw material gas to be liquefied, a sulfur recovery facility for recovering elemental sulfur from the removed acid gas, a moisture removal facility for removing moisture contained in the raw material gas, a compression facility for a refrigerant (mixed refrigerant, propane refrigerant, etc.) used for cooling or liquefying the raw material gas, and the like. Here, the facility of a plant refers to a group of apparatuses or instruments laid according to the purpose of the plant.

The design of such a plant includes, for example, the following processes. First, the facilities in the plant, various instruments such as pumps and heat exchangers, the arrangement of a frame (piping rack) for passing through various pipes, and the route of the main piping are determined, and the layout of the plant is designed to create an arrangement plan called a plot plan. Next, based on functional requirements of the entire plant, a detailed process unit (a series of manufacturing processes) from the receipt of raw materials used in the plant to the shipment of products is formulated, material/heat balance is calculated for each process, and a process flow called a process flow diagram (PFD) is created. Furthermore, based on the PFD, a simulation is repeated to correct the process calculation, the layout of piping that passes through each instrument in the plant and various types of piping are determined (piping routing), and a piping and instrument diagram (P & ID) is created.

The piping routing system 1 according to the present disclosure is a 3D CAD system for supporting process flow creation, piping routing, P & ID creation, and the like by designing the layout of instruments, piping, and the like in the entire plant and each facility in each of such processes.

Hereinafter, the piping routing system 1 will be described. In the following description, for example, when a terminal apparatus 10 accesses a server 20, the server 20 responds with information for generating a screen in the terminal apparatus 10. The terminal apparatus 10 generates and displays a screen based on the information received from the server 20.

### < 1 Overall Configuration of Piping Routing System 1>

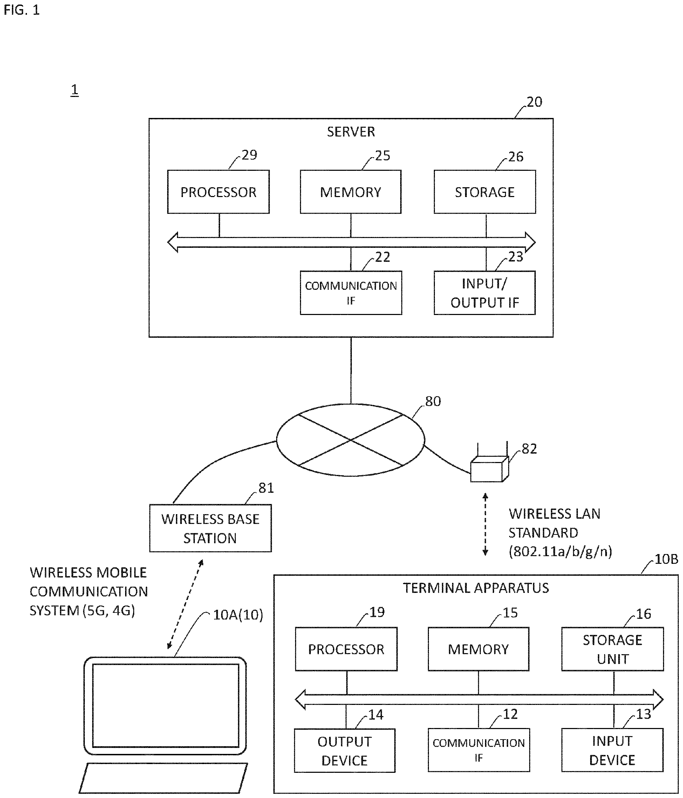

FIG. 1 is a diagram showing an overall configuration of the piping routing system 1. As shown in FIG. 1, the piping routing system 1 includes a plurality of terminal apparatuses (a terminal apparatus 10A and a terminal apparatus 10B are shown in FIG. 1; hereinafter collectively referred to as a "terminal apparatus 10") and a server 20. The terminal apparatus 10 and the server 20 are communicatively connected to each other via a network 80. The network 80 is constituted by a wired or wireless network.

The terminal apparatus 10 is an apparatus operated by each user. Here, the user refers to a person who performs plant design, which is a function of the piping routing system 1, using the terminal apparatus 10. The terminal apparatus 10 is implemented by a stationary personal computer (PC) or a laptop PC. Alternatively, the terminal apparatus 10 may be, for example, a tablet compatible with a mobile communication system or a mobile terminal such as a smartphone.

The terminal apparatus 10 is communicatively connected to the server 20 via the network 80. The terminal apparatus 10 is connected to the network 80 by communicating with a wireless base station 81 compatible with communication standards such as 5G and Long Term Evolution (LTE), or a communication device, such as a wireless local area network (LAN) router 82, compatible with wireless LAN standards such as Institute of Electrical and Electronics Engineers (IEEE) 802.11. As shown in FIG. 1 as the terminal apparatus 10B, the terminal apparatus 10 includes a communication interface (IF) 12, an input device 13, an output device 14, a memory 15, a storage unit 16, and a processor 19.

The communication IF 12 is an interface for inputting and outputting signals to enable the terminal apparatus 10 to communicate with an external apparatus.

The input device 13 is an input device (such as a keyboard, a touch panel, a touch pad, or a pointing device such as a mouse) for receiving an input operation from the user.

The output device 14 is an output device (such as a display or a speaker) for presenting information to the user.

The memory 15 is used to temporarily store a program, data to be processed by the program, etc., and the like, and is a volatile memory such as a dynamic random access memory (DRAM).

The storage unit 16 is a storage device for storing data, and is, for example, a flash memory or a hard disc drive (HDD).

The processor 19 is hardware for executing an instruction set described in a program, and is composed of an arithmetic unit, a register, a peripheral circuit, and the like.

The server 20 is a device that manages information on each user, information on various instruments and various piping, and information on a designed virtual space (including a virtual space being designed).

The server 20 receives, from the user, an input of, for example, types of instruments to be arranged in a virtual space for plant design, their arrangement positions, and an instruction to route piping.

Specifically, for example, a viewpoint (virtual camera) in a virtual space for plant design is set, various instruments arranged and piping routed according to a user's instruction are rendered based on the setting of the virtual camera, and displayed on the terminal apparatus 10.

The server 20 arranges various instruments in a virtual space based on the input types and arrangement positions of the various instruments, determines piping and a route of the piping based on the instruction from a user who performs piping and routing of piping, routes the piping in the virtual space, and causes the user's terminal to display the routing result.

The server 20 is a computer connected to the network 80. The server 20 includes a communication IF 22, an input/output IF 23, a memory 25, a storage 26, and a processor 29.

The communication IF 22 is an interface for inputting and outputting signals to enable the server 20 to communicate with an external apparatus.

The input/output IF 23 functions as an interface with an input device for receiving an input operation from the user and an output device for presenting information to the user.

The memory 25 is used to temporarily store a program, data to be processed by the program, etc., and the like, and is a volatile memory such as a dynamic random access memory (DRAM).

The storage 26 is a storage device for storing data, and is, for example, a flash memory or a hard disc drive (HDD).

The processor 29 is hardware for executing an instruction set described in a program, and is composed of an arithmetic unit, a register, a peripheral circuit, and the like.

### <1.1 Configuration of Terminal Apparatus 10>

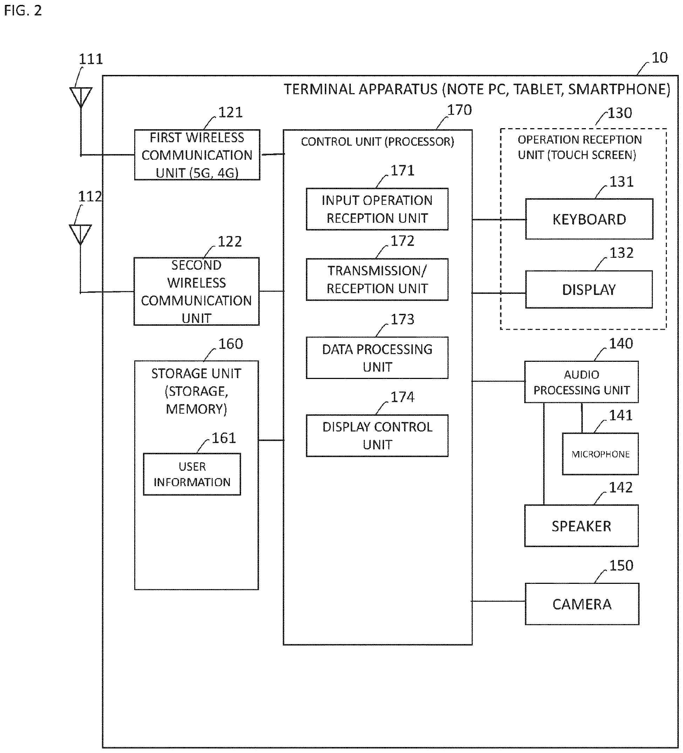

FIG. 2 is a block diagram showing a functional configuration of the terminal apparatus 10 constituting the piping routing system 1. As shown in FIG. 2, the terminal apparatus 10 includes a plurality of antennas (an antenna 111 and an antenna 112), wireless communication units (a first wireless communication unit 121 and a second wireless communication unit 122) corresponding to the respective antennas, an operation reception unit 130 (including a keyboard 131 and a display 132), an audio processing unit 140, a microphone 141, a speaker 142, a camera 150, a storage unit 160, and a control unit 170.

The terminal apparatus 10 also has functions and configurations not particularly shown in FIG. 2 (such as a battery for holding power, and a power supply circuit for controlling supply of power from the battery to each circuit). As shown in FIG. 2, the blocks included in the terminal apparatus 10 are electrically connected by buses or the like.

The antenna 111 radiates a signal emitted from the terminal apparatus 10 as a radio wave. The antenna 111 also receives a radio wave from the space and provides the received signal to the first wireless communication unit 121.

The antenna 112 radiates a signal emitted from the terminal apparatus 10 as a radio wave. The antenna 112 also receives a radio wave from the space and provides the received signal to the second wireless communication unit 122.

The first wireless communication unit 121 performs modulation/demodulation processing or the like for transmitting and receiving signals through the antenna 111 to allow the terminal apparatus 10 to communicate with another wireless apparatus. The second wireless communication unit 122 performs modulation/demodulation processing or the like for transmitting and receiving signals through the antenna 112 to allow the terminal apparatus 10 to communicate with another wireless apparatus. The first wireless communication unit 121 and the second wireless communication unit 122 are communication modules each including a tuner, a received signal strength indicator (RSSI) calculation circuit, a cyclic redundancy check (CRC) calculation circuit, a high frequency circuit, and the like. The first wireless communication unit 121 and the second wireless communication unit 122 perform modulation/demodulation or frequency conversion of a radio signal transmitted or received by the terminal apparatus 10 and provides the received signal to the control unit 170.

The operation reception unit 130 has a mechanism for receiving a user's input operation. Specifically, the operation reception unit 130 includes the keyboard 131 and the display 132. Note that the operation reception unit 130 may be configured as a touch screen that detects a contact position of the user on the touch panel using, for example, a capacitive touch panel.

The keyboard 131 receives an input operation from the user of the terminal apparatus 10. The keyboard 131 is a device for inputting characters and outputs the input character information to the control unit 170 as an input signal.

The display 132 displays data such as an image, video, and text in accordance with control of the control unit 170. The display 132 is realized by, for example, a liquid crystal display (LCD) or an organic electro-luminescence (EL) display.

The audio processing unit 140 modulates and demodulates an audio signal. The audio processing unit 140 modulates a signal provided by the microphone 141 and provides the modulated signal to the control unit 170. The audio processing unit 140 also provides an audio signal to the speaker 142.

The audio processing unit 140 is realized by, for example, a processor for audio processing. The microphone 141 receives an audio input and provides an audio signal corresponding to the audio input to the audio processing unit 140. The speaker 142 converts the audio signal provided from the audio processing unit 140 into audio and outputs the audio to the outside of the terminal apparatus 10.

The camera 150 is a device for receiving light by a light receiving element and outputting it as a captured image. The camera 150 is, for example, a depth camera capable of detecting a distance from the camera 150 to an object to be imaged.

The storage unit 160 is composed of, for example, a flash memory or the like, and stores data and programs used by the terminal apparatus 10. In one aspect, the storage unit 160 stores user information 161.

The user information 161 is information on a user who uses the terminal apparatus 10 to perform plant design which is a function of the piping routing system 1. The user information includes information for identifying the user (user ID), a user name, information on an organization, such as a company, to which the user belongs, and the like.

The control unit 170 controls the operation of the terminal apparatus 10 by reading a program stored in the storage unit 160 and executing instructions included in the program. The control unit 170 is, for example, an application program installed in the terminal apparatus 10 in advance. The control unit 170 operates in accordance with the program to perform the functions as an input operation reception unit 171, a transmission/reception unit 172, a data processing unit 173, and a notification control unit 174.

The input operation reception unit 171 performs processing for receiving a user's input operation on an input device such as the keyboard 131.

The transmission/reception unit 172 performs processing by which the terminal apparatus 10 transmits and receives data to and from an external apparatus such as the server 20 in accordance with a communication protocol.

The data processing unit 173 performs processing for performing an arithmetic operation on data received by the terminal apparatus 10 in accordance with a program, and outputting an operation result to a memory or the like.

The notification control unit 174 performs processing for presenting information to the user. The notification control unit 174 performs processing for causing the display 132 to display a display image, processing for causing the speaker 142 to output audio, and processing for generating vibration on the camera 150.

### < 1.2 Functional Configuration of Server 20>

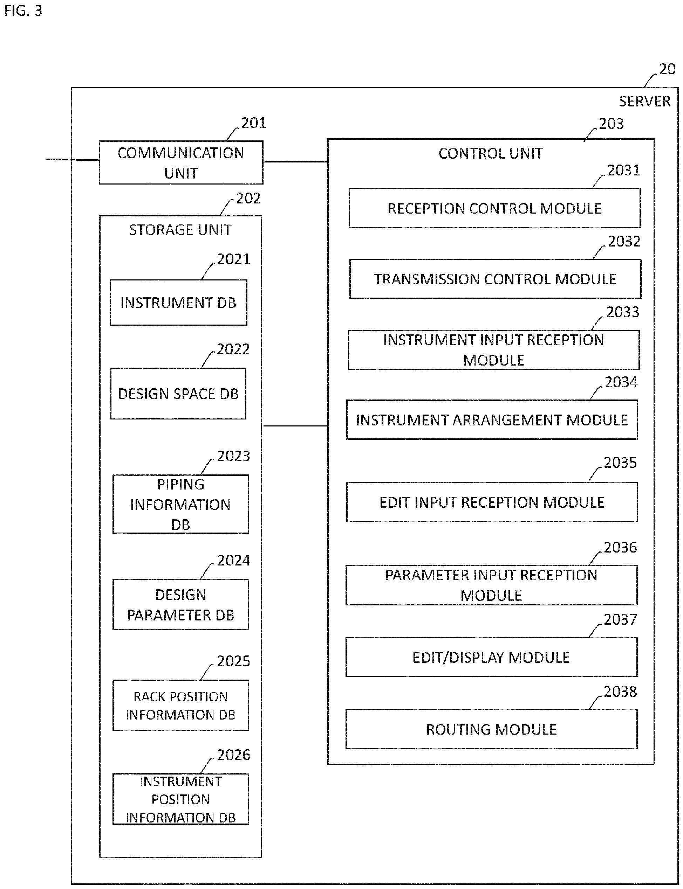

FIG. 3 is a diagram showing a functional configuration of the server 20 constituting the piping routing system 1. As shown in FIG. 3, the server 20 performs functions as a communication unit 201, a storage unit 202, and a control unit 203.

The communication unit 201 performs processing for the server 20 to communicate with an external apparatus.

The storage unit 202 stores data and programs used by the server 20. The storage unit 202 stores an instrument database 2021, a design space database 2022, a piping information database 2023, a design parameter database 2024, a rack position information database 2025, and an instrument position information database 2026.

The instrument database 2021 is a database for holding information on various instruments arranged in a virtual space presented for plant design in the piping routing system 1. Details will be described later.

The design space database 2022 is a database for holding information on a virtual space designed by the user. Details will be described later.

The piping information database 2023 is a database that stores information on types of piping classified according to the attribute of the fluid flowing inside. Details will be described later.

The design parameter database 2024 is a database for holding information on parameters for piping routing (piping design parameters) in the pipe routing system 1. Details will be described later.

The rack position information database 2025 is a database for holding information indicating a rack area of each rack arranged in a three-dimensional space, which is designated by the user when routing piping. Details will be described later.

The instrument position information database 2026 is a database for holding information on the positions of various instruments arranged in a three-dimensional space, including the start point and the end point of each instrument. Details will be described later.

When the processor 29 of the server 20 performs processing in accordance with programs, the control unit 203 functions as various modules such as a reception control module 2031, a transmission control module 2032, an instrument input reception module 2033, an instrument arrangement module 2034, an edit input reception module 2035, a parameter input reception module 2036, an edit/display module 2037, and a routing module 2038.

The reception control module 2031 controls processing for the server 20 to receive a signal from an external apparatus in accordance with a communication protocol.

The transmission control module 2032 controls processing for the server 20 to transmit a signal to an external apparatus in accordance with a communication protocol.

The instrument input reception module 2033 controls processing for receiving, from the user, an operation to input types of various instruments to be arranged in a virtual space for performing plant design using the piping routing system 1 and positions where the various instruments are to be arranged in the virtual space.

When the user performs plant design using the terminal apparatus 10, the display 132 of the terminal apparatus 10 displays a virtual space modeled on an actual site for which plant design is to be performed. Thereafter, the user performs a predetermined operation on a screen of the display 132 to input types of various instruments to be arranged in the virtual space, and their arrangement positions in the virtual space, and the instrument input reception module 2033 receives information on the input types of various instruments and arrangement positions in the virtual space.

The predetermined operation on a screen of the display 132 which is received by the instrument input reception module 2033 is an operation to select a desired type, by clicking or the like, from the list of various instruments in a plurality of patterns displayed on the screen and select an arrangement position by clicking or the like of a desired position of the virtual space displayed on the screen. As another example of the predetermined operation, there is an operation to select an arrangement position by selecting a desired image from a list of images showing the appearances of various instruments displayed on the screen, dragging the image, and moving the image to a desired position in the virtual space displayed on the screen. The input of the various instruments is not limited to such an input operation.

The instrument arrangement module 2034 controls the processing for arranging and displaying various instruments in the virtual space, based on the information on the types of various instruments and arrangement positions in the virtual space received by the instrument input reception module 2033. Since the information on the types of various instruments to be arranged in the virtual space and their arrangement positions in the virtual space is received by the predetermined operation to the terminal apparatus 10 by the user, based on such information, the various instruments are arranged at the input arrangement positions in the virtual space displayed on the display 132 of the terminal apparatus 10, and displayed on the display 132 of the terminal apparatus 10.

Here, an object indicating an instrument to be arranged in the virtual space has nozzles to which piping is connected as a start point and an end point. The object includes information on the start point and the end point.

The edit input reception module 2035 controls processing for receiving an input operation to edit various instruments from the user. When the user inputs edit information for making various adjustments to various instruments displayed on the display 132 of the terminal apparatus 10, the edit input reception module 2035 receives the input edit information on various instruments. The edit of each of various instruments is, for example, edit corresponding to one or more of the type, shape, size, quantity, and position of the instrument.

The input operation to edit various instruments by the user at the edit input reception module 2035 is, for example, an input operation to edit parameters set for various instruments. As another example of the input operation by the user is an input operation to edit the size, length, or the like by dragging one of various instruments displayed on the display 132, and a numerical value corresponding to the size or length is received as a parameter.

The parameter input reception module 2036 controls processing for receiving an input of various parameters when routing piping. The various parameters include information on the types of piping, the types of instruments to be connected, and the quantity, size, and arrangement of piping trays. Details of various parameters will be described later. The user operates the terminal apparatus 10 to input various parameters when routing piping.

The edit/display module 2037 controls processing for changing the display mode of the various instruments and displaying them in the virtual space, based on the edit information on the various instruments received by the edit input reception module 2035. Since the information to edit each of the various instruments arranged in the virtual space, for example, information on the length of piping and the connection angle with each instrument is received by the predetermined operation to the terminal apparatus 10 by the user, based on such information, the display mode of the various instruments is changed in the virtual space displayed on the display 132 of the terminal apparatus 10, for example, their appearances are changed in accordance with the received length of an attached pipe or connection angle of each instrument, and displayed on the display 132 of the terminal apparatus 10.

The routing module 2038 receives from the user an instruction operation to perform routing of piping to be arranged in a plant to be designed using the piping routing system 1 in association with various instruments arranged in the virtual space, and controls processing for performing routing. The piping to be arranged in the plant includes, for example, piping for transporting a raw material gas in the plant, piping for transporting an absorbent for absorbing a removed component from the raw material gas, and piping for transporting an exhaust gas, and is arranged to allow liquid or gaseous fluids to flow therethrough.

The user designates, for example, on a screen displayed on the display 132 of the terminal apparatus 10, a predetermined position of each of the various instruments arranged in the virtual space, such as an end point of the attached pipe of the instrument, as a start position or an end position of routing and performs an operation to issue an instruction for routing (for example, pressing of a predetermined button on the screen). The routing module 2038 receives a routing instruction from the user and performs routing of piping.

Note that the routing module 2038 may perform routing (so-called manual routing) of piping based on detailed input information, which is performed by the user in the virtual space, or may perform automatic routing by the user designating start and end points. At this time, the direction of routing of piping is determined according to predetermined conditions, and automatic routing is performed using an algorithm for avoiding existing various piping and instruments. Further, the routing module 2038 may be configured to perform routing using a piping diameter, a material, and the like designated by parameters input by the user or parameters set in advance or configured to recommend piping of a pipe diameter and a material optimum for a fluid to be passed therethrough.

The routing module 2038 performs processing for avoiding interference between pipings and between piping and other instruments in routing. Specifically, the routing module 2038 first sets a tentative route connecting the start point and the end point. Next, the routing module 2038 detects whether or not there is interference with an obstacle for the tentative route. Here, the obstacle refers to other piping that has already been routed and other instruments that have already been arranged.

When interference with another obstacle is detected, the routing module 2038 changes the tentative route to generate a plurality of alternative routes that bypass the obstacle. When generating alternative routes, an obstacle is bypassed along the coordinate axes of the virtual space.

The routing module 2038 modifies each alternative route to generate a modified route with a smaller number of bends and a shorter path length than the alternative route. For example, when a plurality of obstacles are arranged at intervals, a modified route that bypasses the entire area in which the obstacles are located is generated for the alternative route that is a route to bypass each of the obstacles.

The routing module 2038 evaluates a score value calculated based on the path length for each of the plurality of alternative routes and modified routes, and selects the optimum route. The score value is calculated such that a route with a short path length is highly rated. Then, the routing module 2038 performs routing of piping so as to connect the start point and the end point in accordance with the optimum route.

In the present embodiment, as described above, the server 20 receives an input of types and arrangement positions of various instruments and issues a display instruction to the terminal apparatus 10, receives an edit input of each of various instruments and issues a display instruction to the terminal apparatus 10, receives an instruction for piping routing and performs routing, and causes the terminal apparatus 10 to perform display, but the configuration is not limited to this.

For example, some or all of the functions described above may be performed in the terminal apparatus 10 by receiving an input at the terminal apparatus 10 for processing in the terminal apparatus 10, and the result may be displayed on the display 132 of the terminal apparatus 10. In order to achieve such a configuration, the user may access the server 20 via the terminal apparatus 10 to have a program provided by the server 20 installed into the terminal apparatus 10 and cause the terminal apparatus 10 to perform processing. In this case, the server 20 may lack the functions of some or all of the instrument input reception module 2033, the instrument arrangement module 2034, the edit input reception module 2035, the parameter input reception module 2036, the edit/display module 2037, and the routing module 2038.

### <3 Data Structure>

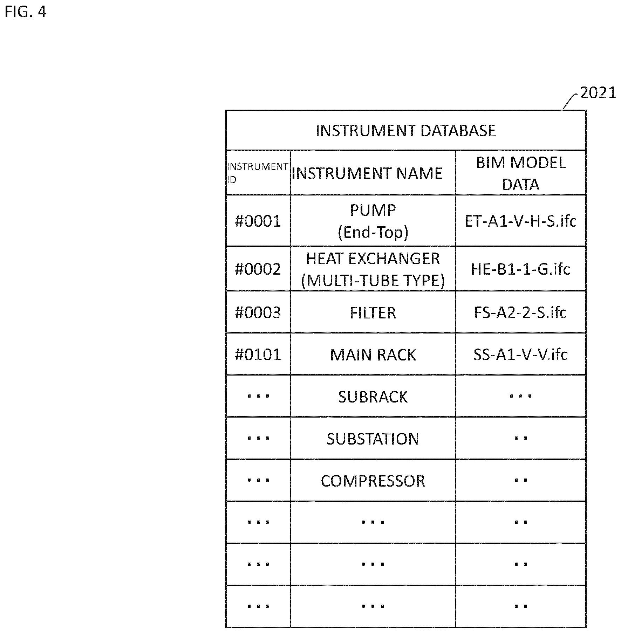

FIG. 4 is a diagram showing the instrument database 2021 stored in the server 20.

As shown in FIG. 4, each record of the instrument database 2021 includes an item "Instrument ID", an item "Instrument Name", an item "BIM Model Data", and the like.

The item "Instrument ID" is information for identifying the type of each of various instruments that can be arranged in the virtual space in the piping routing system 1.

The item "Name" is a name indicating the type of each of various instruments, and for example, information on a name indicating a type such as a pump, a heat exchanger, a filter, a valve, or a rack is stored. In the case of a pump or a heat exchanger, information indicating the type of the pump such as an end-top type or the type of the heat exchanger such as a multi-tube type is also stored. Note that the name indicating the instrument may be a symbol designated by a predetermined standard or the like, or a model number or the like designated by the manufacturer.

The item "BIM Model Data" is information indicating the data name (file name) of model data arranged in the virtual space in the piping routing system 1, and is model data used in the 3D CAD system. The 3D CAD system provided by the server 20 constructs a three-dimensional virtual space, and performs modeling to represent the shapes of instruments in the three-dimensional virtual space. In addition, the 3D CAD system sets a viewpoint (virtual camera) in the virtual space, and performs rendering for these instruments based on the setting of the virtual camera. The model data stored in the item "BIM Model Data" is model data for rendering an actual instrument from the viewpoint of the predetermined virtual camera.

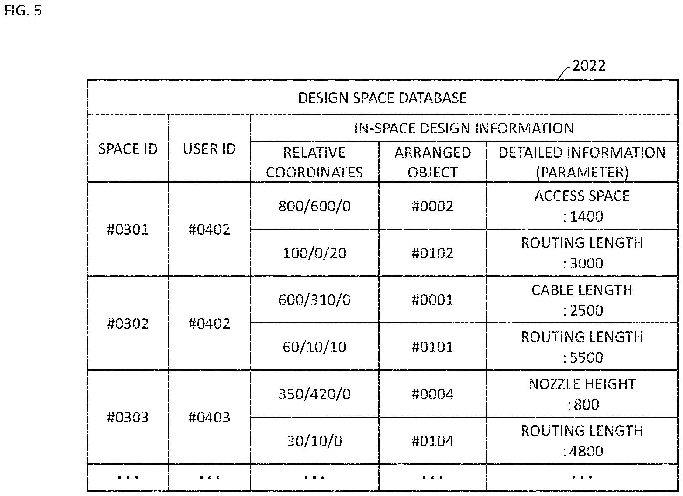

FIG. 5 is a diagram showing an example data structure of the design space database 2022.
As shown in FIG. 5, each record of the design space database 2022 includes an item "Space ID", an item "User ID", an item "In-space Piping Information", and the like.

The item "Space ID" is information for identifying each piece of information of the virtual space designed by the user in the piping routing system 1.

The item "User ID" is information for identifying each user who uses the piping routing system 1. Note that information for identifying a plurality of users may be stored as the item "User ID", as in the example where the item "Space ID" is "#0302". This is to enable a plurality of users to design and share one virtual space, and the information of the item "In-space Design Information" to be described later may be stored in association with each user.

The item "In-space Piping Information" is information on block patterns or individual instruments arranged and piping routed in the virtual space by the user in the piping routing system 1, and specifically includes an item "Relative Coordinates", an item "Arranged Object", an item "Detailed Information (Parameter)", and the like.

The item "Relative Coordinates" is information indicating the relative position in the virtual space of an instrument or piping arranged in the virtual space, and for example, three-dimensional coordinate data in the virtual space is stored. The relative coordinates are, for example, relative coordinates of a reference position of the instrument (for example, a center position or an end point in any of six directions) when the virtual space is expressed by XYZ coordinates, but are not limited to the ones in this system.

The item "Arranged Object" is information indicating an instrument or piping arranged in the virtual space, and corresponds to the item "Instrument ID" of the instrument database 2021.

The item "Detailed Information (Parameter)" is edit information when an instrument or piping arranged in the virtual space is edited, and information on routed piping, and for example, an edit parameter of an instrument is stored. The edit parameter of an instrument is information on quantity or size.

The instrument input reception module 2033 of the server 20 adds a record to the design space database 2022 to update it as arrangement information of an instrument is received from each user. The edit input reception module 2035 adds a record to the design space database 2022 to update it as edit parameter information of an instrument is received from each user. The routing module 2038 adds a record to the design space database 2022 to update it as piping routing processing is performed.

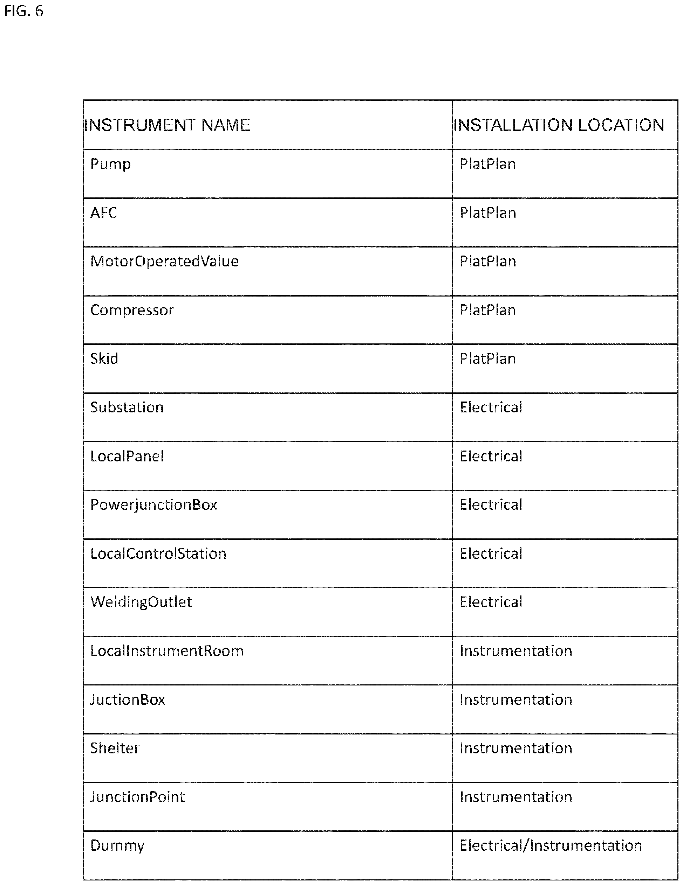

FIG. 6 is a diagram showing types of instruments handled by the piping routing system 1.

As shown in FIG. 6, various instruments such as a pump, a compressor, a tower, and a junction box are used in the piping routing system 1. These are each arranged in a predetermined installation section depending on the type of the instrument.

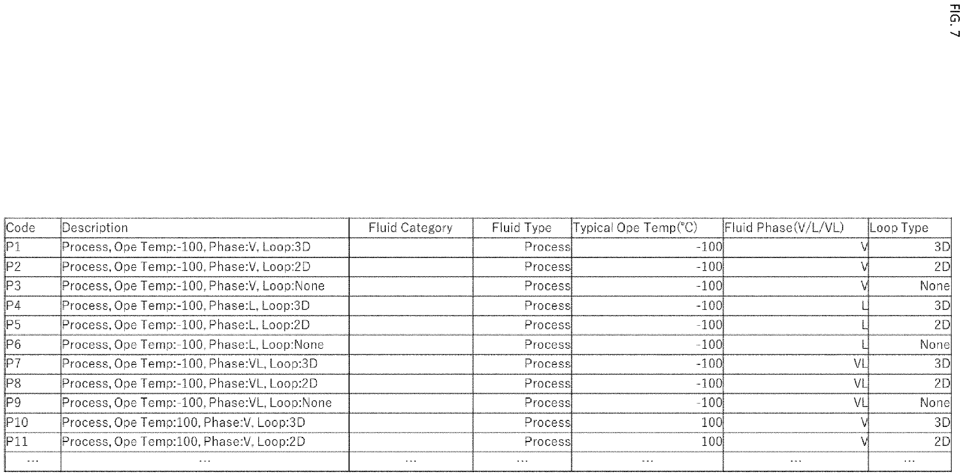

FIG. 7 is a diagram showing an example data structure of the piping information database 2023. As shown in FIG. 7, the piping information database 2023 includes an item "Code", an item "Description", an item "Fluid Category", an item "Fluid Type", an item "Typical Ope Temp (°C)", an item "Fluid Phase (V/L/VL)", an item "Loop Type", and the like.

The item "Code" is information indicating a fluid code assigned to the attribute of the fluid flowing in the piping.

The item "Description" is information describing the fluid that is set corresponding to the fluid code. Details of the items will be described below.

The item "Fluid Category" is information indicating the classification of the fluid, and is used when the piping sequence is determined. This field may be left blank.

The item "Fluid Type" is information indicating the type of the fluid, and is used for determining the number of stages of piping. The types of fluids are "process", "utility", and "flare".

The "process" refers to piping or a piping system that carries raw materials and products from one instrument to another instrument to separate and refine raw materials so as to extract products, by-products, and waste.

The "utility" refers to piping or a piping system that carries water, air, steam, fuel, nitrogen, etc., necessary to operate or maintain the instruments of the plant.

In addition, when the design pressure is exceeded in an instrument or piping that handles a flammable fluid, the internal fluid is discharged from a safety valve or a control valve and burned in a flare stack. The "flare" refers to piping or a piping system which a flammable fluid discharged from the safety valve or control valve is carried to.

The item "Typical Ope Temp (°C)" is information indicating the general temperature at which the fluid flows, and is used to determine the thickness of the heat insulating material. This field may be left blank.

The item "Fluid Phase (V/L/VL)" is information indicating the state of the fluid, and is information indicating whether the direction of the branch portion is upward or downward.

The item "Loop Type" is information indicating the structure of the loop portion of the piping, and is used for determining whether or not a loop portion is required and the shape of the loop portion.

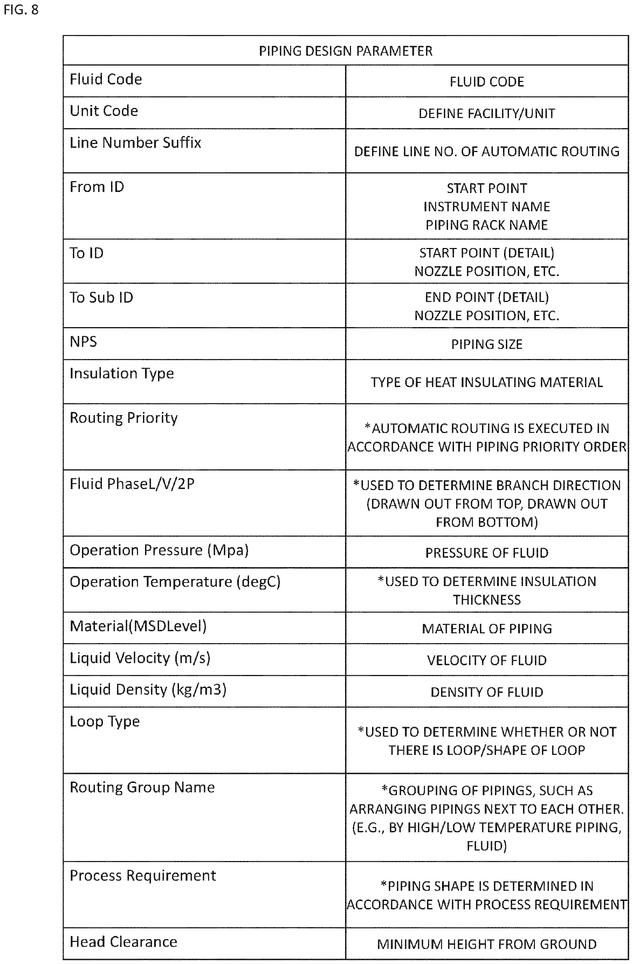

FIG. 8 is information showing the contents of the design parameter database 2024.

The piping design parameters include an item "Fluid Code", an item "Unit Code", an item "Line Number Suffix", an item "From ID", an item "To ID", an item "To Sub ID", an item "NPS", an item "Insulation Type", an item "Routing Priority", an item "Fluid Phase L/V/2P", an item "Operation Pressure (Mpa)", an item "Operation Temperature (degC)", an item "Material (MSD Level", an item "Liquid Velocity (m/s)", an item "Liquid Density (kg/m³)", an item "Loop Type", an item "Routing Group Name", an item "Process Requirement", and an item "Bottom of Pipe".

The item "Fluid Code" is information indicating a fluid code indicating a fluid flowing through piping.

The item "Unit Code" is information indicating a code of a unit, a facility to which the piping is connected.

The item "Line Number Suffix" is information indicating the line number of the piping to be routed.

The item "From ID" is information indicating a start point ID indicating the position of the start point of the piping to be routed. Here, the object selected as the start point is the first object of the present invention.

The item "To ID" is information indicating an end point ID indicating the position of the end point of the piping to be routed. Here, the object selected as the end point is the second object of the present invention.

The item "To Sub ID" is information indicating details of the piping to be routed, for example, the position of a nozzle.

The item "NPS" is information indicating the size of the piping.

The item "Insulation Type" is information indicating the type of insulating material of the piping to be routed.

The item "Routing Priority" is information indicating the routing priority. It is used when routing piping.

The item "Fluid Phase L/V/2P" is information indicating the state of the fluid flowing through the piping, and is information used when determining the structure of the branch portion of the piping.

The item "Operation Pressure (Mpa)" is information indicating the pressure of the fluid in the piping.

The item "Operation Temperature (degC)" is information indicating the temperature of the fluid in the piping.

The item "Material (MSD Level)" is information indicating the material of the piping.

The item "Liquid Velocity (m/s)" is information indicating the velocity of the fluid flowing through the piping.

The item "Liquid Density (kg/m³)" is information indicating the density of the fluid flowing through the piping.

The item "Loop Type" is information indicating whether or not a loop portion is required for the piping and the structure of the loop portion. Here, the loop portion refers to a portion bent so as to partially detour from the original route in order to absorb the thermal stress received from the fluid when a high-temperature fluid flows through the piping, for example. In the item "Loop Type", 2D (two dimensional) or 3D (three dimensional) information is input.

The item "Routing Group Name" is information used when performing grouping such as arranging a plurality of pipings adjacent to each other. For example, it is applied to piping for cooling water or the like.

The item "Process Requirement" is information on a process requirement. The process requirement is information indicating a certain condition under which the structure of the path of the piping is designated. Details of the process requirement will be described later.

The item "Routing Group Name" is information used when performing grouping such as arranging a plurality of pipings adjacent to each other. For example, it is applied to piping for cooling water or the like.

The item "Head Clearance" is information specifying the height of the lowest part of the piping from the ground. A dimension value is input in the item "Head Clearance".

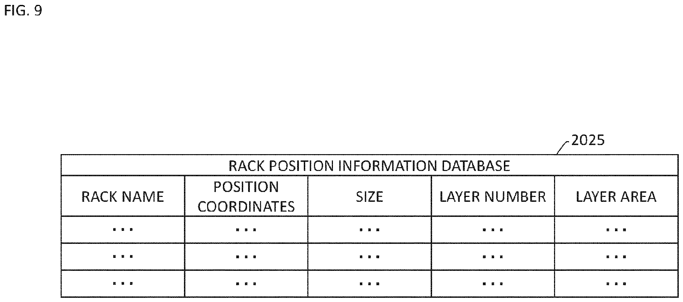

FIG. 9 is information showing the contents of the rack position information database 2025. As shown in FIG. 8, the rack position information database 2025 includes an item "Rack Name", an item "Position Coordinates", an item "Size", an item "Layer Number", and an item "Layer Area".

The item "Rack Name" is information indicating the name of the rack designated by the user when routing piping.

The item "Position Coordinates" is information indicating the position in the three-dimensional space of the origin of the rack corresponding to the rack name. The position in the three-dimensional space is represented by a coordinate value with respect to the reference origin of the three-dimensional space.

The item "Size" is information indicating the size of the rack corresponding to the rack name from the origin. The size is specified for each of three orthogonal directions.

The item "Layer Number" is information indicating the number of the layer (level) of the rack designated by the user when routing piping. The rack has a stacked structure in which spaces in which piping is laid are partitioned at intervals in the vertical direction. Layer numbers are assigned to the spaces in order from 1 from the bottom to the top.

The item "Layer Area" is information indicating an area designated by the user in each layer. The layer area is designated according to a dimension designated by the user. For example, the user designates a layer area in the form of a range of 1500 mm from the left edge of the layer. The item "Layer Area" stores information designated in this manner.

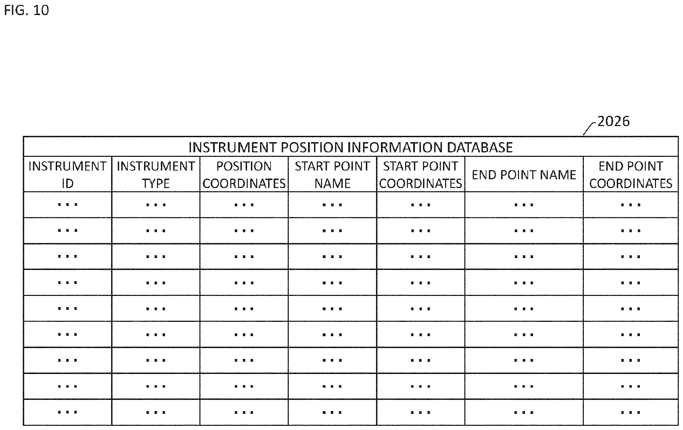

FIG. 10 is a diagram showing an example data structure of the instrument position information database 2026. As shown in FIG. 10, the instrument position information DB includes an item "Instrument ID", an item "Instrument Type", an item "Position Coordinates", an item "Start Point Name", an item "Start Point Coordinates", an item "End Point Name", and an item "End Point Coordinates".

The item "Instrument ID" is information for identifying an instrument arranged in the three-dimensional space.

The item "Instrument Type" is information indicating the type of the instrument corresponding to the instrument ID.

The item "Position Coordinates" is information indicating the position coordinates of the instrument corresponding to the instrument ID in the three-dimensional space.

The item "Start Point Name" is information indicating the name of the start point in the instrument corresponding to the instrument ID.

The item "Start Point Coordinates" is information indicating the position coordinates in the three-dimensional space of the start point in the instrument corresponding to the instrument ID.

The item "End Point Name" is information indicating the name of the end point in the instrument corresponding to the instrument ID.

The item "End Point Coordinates" is information indicating the position coordinates in the three-dimensional space of the end point in the instrument corresponding to the instrument ID.

### <4 Operation>

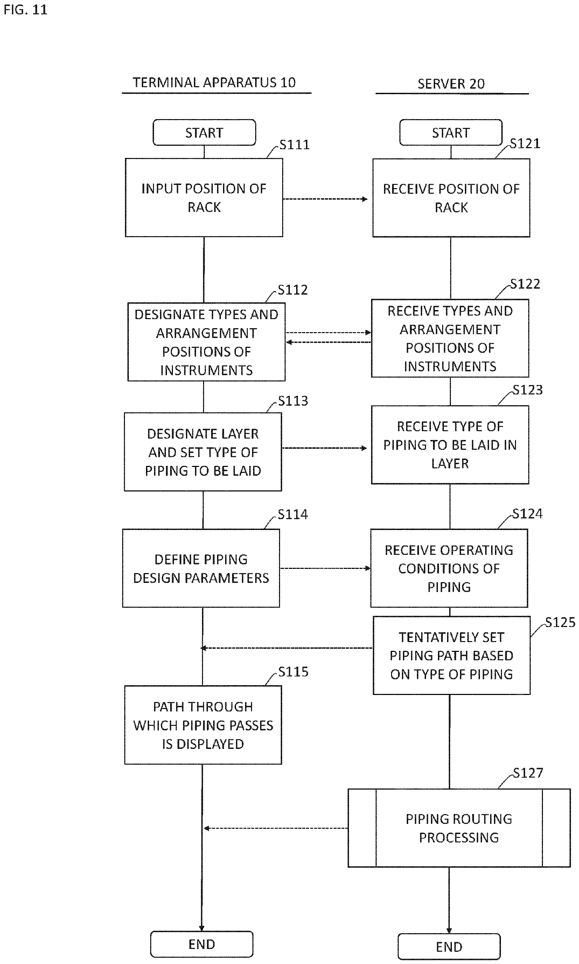

The piping routing processing by the piping routing system 1 in the present embodiment will be described below with reference to FIG. 11 to FIG. 19.

FIG. 11 is a flowchart showing the entire piping routing processing by the piping routing system 1. For example, the user accesses the server 20 via a web browser of the terminal apparatus 10 and issues an instruction to receive a plant design service provided by the server 20, thereby starting the processing. At this time, a predetermined authentication may be performed for the user.

In the pipe routing system 1, the user operates the terminal apparatus 10 to input a position of a rack (step S111). Specifically, in a virtual space displayed as the initial state, an object indicating a rack is operated to arrange the rack at a position desired by the user. The size and type of the rack can be selected and designated by the user.

In step S 111, a longitudinal direction is designated for the rack. The longitudinal direction refers to a direction in which the rack extends in a plan view seen from above. The longitudinal direction of the rack may be designated separately by the user, or may be designated according to the shape of the rack edited by the user.

In step S 121, the control unit 203 of the server 20 transmits an instruction to display the virtual space to the terminal apparatus 10 via the communication unit 201 in order to receive an input of the position and size of the rack to be arranged in the virtual space for plant design.

In step S121, the instrument input reception module 2033 of the server 20 receives, via the communication unit 201, information on types and arrangement positions of various instruments in the virtual space, and user information transmitted from the terminal apparatus 10.

After step S112, the server 20 receives input information on the type, size, and designated position in the virtual space of the rack, and arranges the relevant rack in the virtual space (step S121).

Next, the user designates types and arrangement positions of instruments to be connected by piping (step S 112).

The server 20 receives the types and arrangement positions of the instruments designated by the user (step S122).

In step S122, the control unit 203 of the server 20 transmits an instruction to display the virtual space to the terminal apparatus 10 via the communication unit 201 in order to receive the input of the types and arrangement positions in the virtual space of the various instruments to be arranged in the virtual space for plant design.

In step S122, the input operation reception unit 171 of the terminal apparatus 10 receives from the user an input operation of the types and arrangement positions in the virtual space of the various instruments. The transmission/reception unit 172 transmits the received information on the types and arrangement positions in the virtual space of the various instruments and user information to the server 20.

In step S122, the instrument input reception module 2033 of the server 20 receives, via the communication unit 201, the information on the types and arrangement positions in the virtual space of the various instruments and user information transmitted from the terminal apparatus 10.

In step S122, the instrument arrangement module 2034 of the server 20 refers to the instrument database 2021 based on the information on the types and arrangement positions in the virtual space of the various instruments received in step S122, and transmits instruction information for arranging and displaying the various instruments in the virtual space to the terminal apparatus 10 via the communication unit 201. The instrument arrangement module 2034 also stores the received information on the types and arrangement positions in the virtual space of the various instruments in the design space database 2022.

In step S122, the transmission/reception unit 172 receives instruction information transmitted from the server 20 to arrange and display the various instruments in the virtual space. The notification control unit 174 arranges various instruments in the virtual space and causes the display 132 to display them.

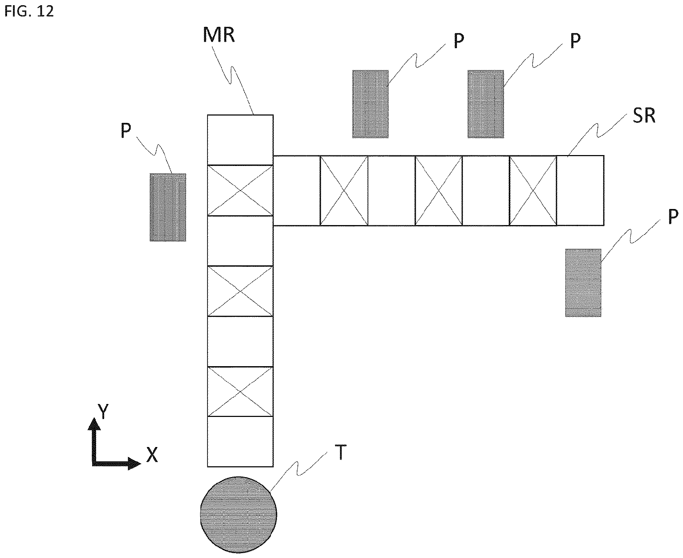

A display example in the terminal apparatus 10 at this time is shown using FIG. 12. FIG. 12 is a diagram showing an example operation screen in a state where a rack and various instruments are arranged in a three-dimensional virtual space. In this figure, the three-dimensional virtual space is expressed as a plan view viewed from above.

As shown in FIG. 12, the three-dimensional space has three-dimensional Cartesian coordinates. In this figure, a main rack MR, a subrack SR, a tower T, and a plurality of pumps are shown.

The main rack MR has a longitudinal direction extending along the Y direction.

The subrack SR has a longitudinal direction extending along the X direction.

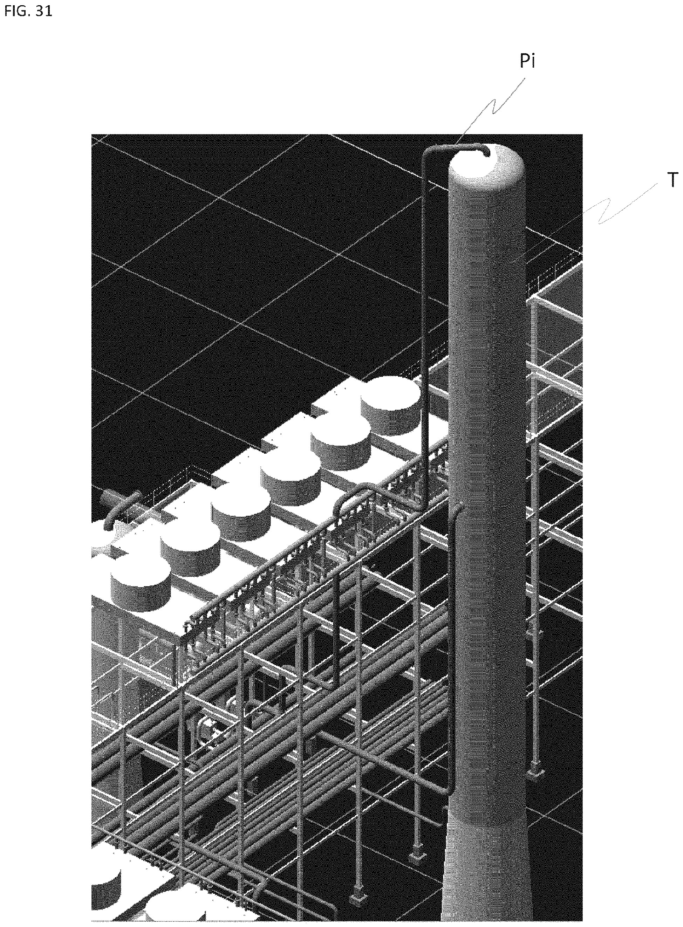

The tower T is located at an end of the main rack, and is a cylindrical structure (see FIG. 31)

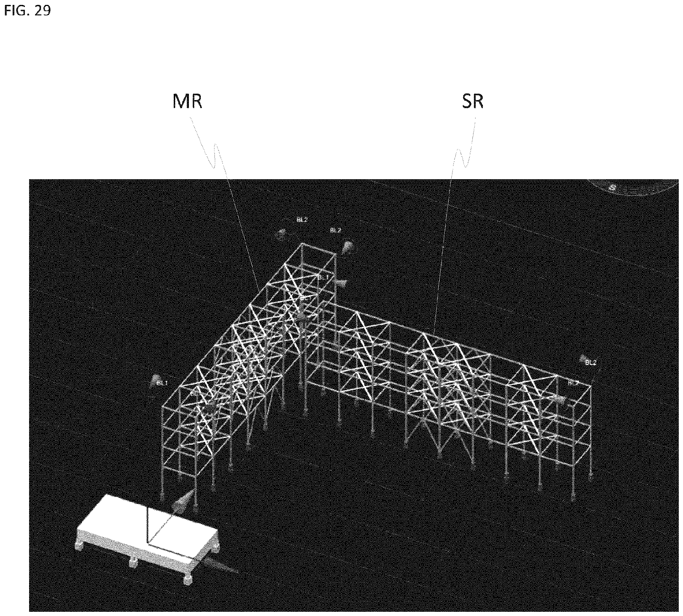

Referring now to FIG. 29, the structures of the main rack MR and the subrack SR will be described in detail. FIG. 29 is a diagram showing appearances of the main rack MR and the subrack SR in a three-dimensional space.

As shown in FIG. 29, the heights of the layers of the main rack MR are different from those of the subrack SR. The longitudinal direction of the main rack MR and the longitudinal direction of the subrack SR are orthogonal to each other.

After step S112, the user operates the terminal apparatus 10 to designate a position of a layer in which piping is to be laid for a rack, and sets a type of piping to be laid for the designated layer (step S113). Specifically, the user designates the position of the layer in which piping is to be laid of a rack installed in the virtual space. Further, the user designates an area to be occupied by the piping for the relevant layer. Further, a type of piping is set for the designated layer by selecting a type of fluid that flows through the piping. The user may select the type of piping by selecting a fluid code.

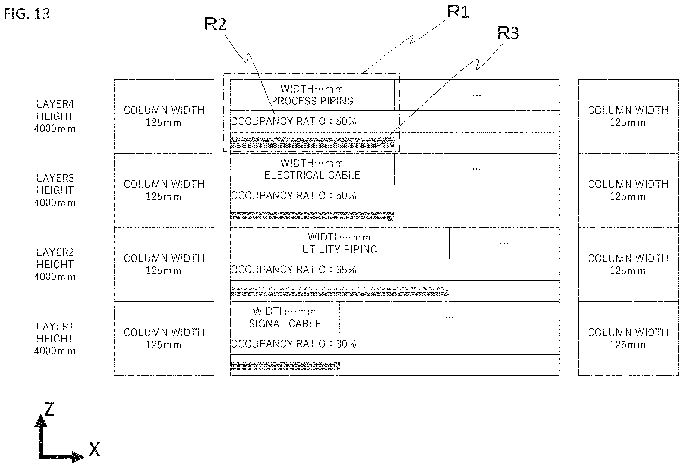

Here, an operation to designate a layer and an area of the layer in which piping is to be laid will be described using a screen example. FIG. 13 is a diagram showing an example operation screen for designating a layer and an area in which piping is to be laid. In step S 112, an edit screen showing the type of piping arranged for each layer of a rack is displayed.

As shown in FIG. 13, in this operation screen (edit screen), piping and piping accommodated in the rack are displayed in a cross-sectional view orthogonal to the longitudinal direction in which the rack extends. This figure schematically shows the structures of layers stacked in the rack. In the region indicated by reference symbol R1, process piping is designated to be laid. On this operation screen, an area in the layer can be designated by designating a dimension from an end of the rack.

This operation screen also shows the occupancy ratio of each type of piping arranged for each layer of the rack (reference symbol R2). The occupancy rate refers to the ratio of the length in the width direction (diameter) of the designated piping to the width direction (X direction) of the layer.

By confirming the occupancy rate, the proportion occupied by the relevant type of piping can be confirmed.

This operation screen also shows a bar (reference symbol R3) which visually shows the occupancy ratio. The bar extends half the space of the area of the layer when the occupancy ratio is 50%. By confirming the bar, how much free space is left in the layer can be intuitively ascertained.

As shown in FIG. 11, after step S113, the server 20 receives information on the layer and area in which the piping is to be laid, which is designated by the user (step S123). Specifically, the server 20 stores the designated information on the layer and area of the rack as a new record in the rack position information DB.

Next, the user inputs piping design parameters (step 5114). Specifically, the user inputs items other than the fluid type that has already been input among the items included in the design parameter DB 2024. Specifically, a line number, a designation of a start point and an end point, a pipe size, a process requirement, priority, an operating temperature and the like are input.

After step S124, the server 20 receives the piping design parameters input by the user. Specifically, the items input by the user are stored as a new record in the design parameter DB 2024.

As shown in FIG. 11, after step S114, the routing module 2038 tentatively sets a piping path in accordance with the information on the position of each instrument and the contents of the definition items defined as piping to be routed (step S125). Here, the piping path is a certain area in a layer of a rack in which piping is laid, and is a concept indicating a path in a space in which piping is laid. In step S125, the distance orthogonal to the longitudinal direction between an instrument connected by the piping and each rack is confirmed, and the closest rack to the instrument is identified. In the tentative piping path setting, the piping path is set to pass through the identified closest rack.

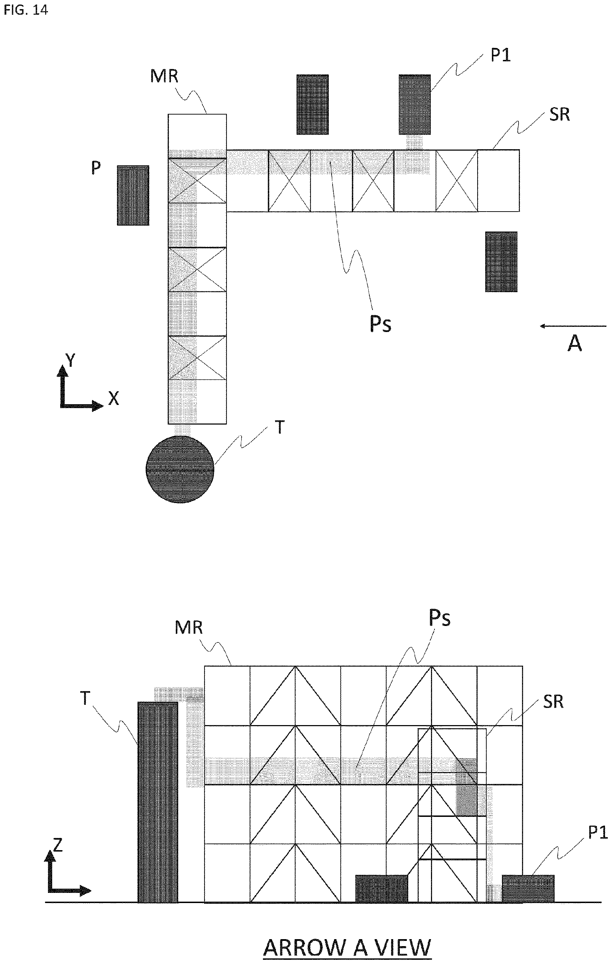

As a result, the path in the space in which the piping is laid is tentatively set, and the piping path through which the piping passes is displayed on the terminal apparatus 10 (step 5115). The details of the set piping path are displayed in the virtual space. The operation screen of the terminal apparatus 10 at this time is shown using FIG. 14. FIG. 14 is a diagram showing an example operation screen of the terminal apparatus 10 when the piping path has been set.

In FIG. 14, a portion indicated by hatching is a piping path indicating the path in a space in which piping is laid. The piping path passes from the tower T through the third layer of the main rack MR, passes through the third layer of the subrack SR, and is connected to the pump P1.

Next, the routing module 2038 of the server 20 performs piping routing (step S217). Details of this processing will be described later.

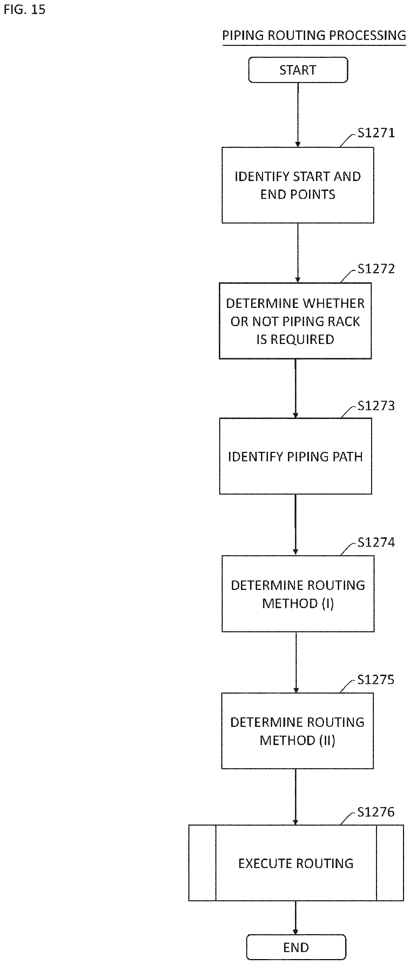

Next, details of the piping routing processing will be described with reference to FIG. 15. FIG. 15 is a diagram showing details of the piping routing processing.

As shown in FIG. 15, in the piping routing processing, the routing module 2038 first identifies the start and end points (step S1271). Specifically, the routing module 2038 reads information on the start point and the end point of the piping to be routed from the piping design parameters input to the design parameter DB 2024. Here, the information on the start point and the end point may include information on the orientation of the nozzle to which the piping is connected.

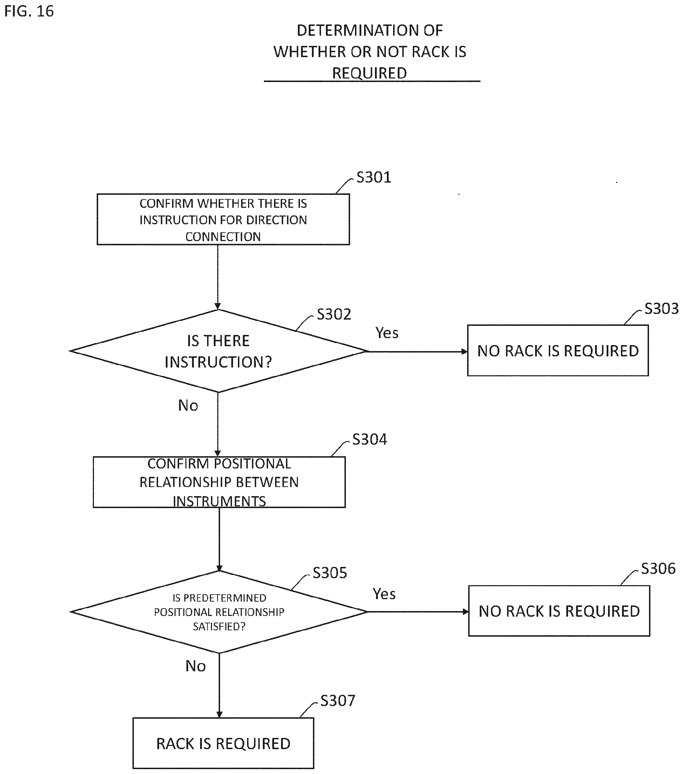

Next, the routing module 2038 determines whether or not a rack is required (step S1272). This process will be described in detail with reference to FIG. 16. FIG. 16 is a diagram showing the process of determining whether or not a rack is required.

As shown in FIG. 16, in determining whether or not a rack is required, whether or not there is an instruction for direct connection from the user is confirmed (step S301). The instruction for direct connection is stored in the design parameter DB 2024 as a piping design parameter.

When there is an instruction for direct connection from the user (Yes in step S302), the routing module 2038 determines that no rack is required in the routing (step S303). On the other hand, when there is no instruction for direct connection from the user (No in step S302), the routing module 2038 confirms the positional relationship between the instruments to be connected by the piping (step S304).

Here, the predetermined positional relationship between the instruments is, for example, whether or not the distance in the longitudinal direction is less than half of one pitch, which is a unit element for sectioning the rack in the longitudinal direction.

That is, when routing piping using a rack, when the distance of the piping to be mounted on the rack is short, the connection structure becomes rather complicated when the piping is mounted on the rack; therefore, the instruments are directly connected to each other by piping or the instruments are connected to each other by piping so that the piping crosses the rack.

Note that the predetermined positional relationship is not limited to the criterion of being equal to or less than half of one pitch of the rack, and may be set arbitrarily.

When the positional relationship between the instruments satisfies the predetermined positional relationship (Yes in Step S305), the routing module 2038 determines that no rack is required (step S306).

On the other hand, when the positional relationship between the instruments does not satisfy the predetermined positional relationship (No in step S305), the routing module 2038 determines that a rack is required.

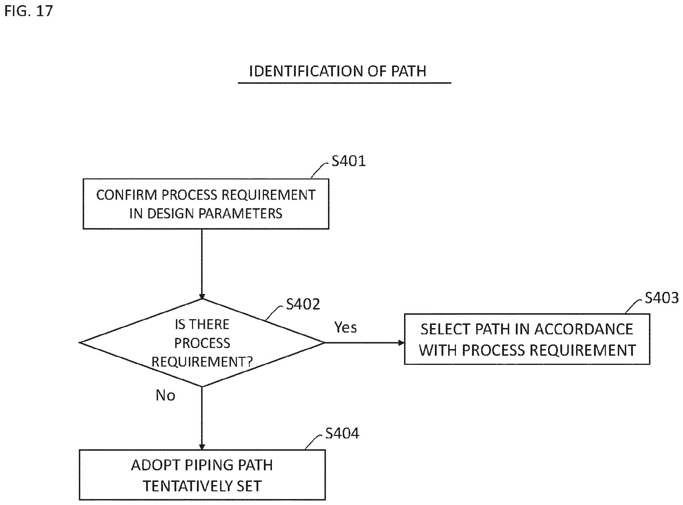

Next, as shown in FIG. 15, the routing module 2038 identifies a piping path (step S1273). That is, the routing module 2038 determines whether to adopt the piping path tentatively set in step S125 or to adopt another path as the piping path. This process of identifying the piping path will be described in detail with reference to FIG. 17. FIG. 17 is a diagram showing the process in which the routing module 2038 identifies a piping path.

As shown in FIG. 17, in identifying a piping path, the routing module 2038 confirms whether or not there is a process requirement. Specifically, the routing module 2038 confirms whether or not a process requirement input by the user is stored in the design parameter DB 2024.

When it is confirmed that there is a process requirement (Yes in step S302), the routing module 2038 newly selects a piping path in accordance with the process requirement (step S403). In this case, at least a part of the piping path tentatively set in step S125 is changed so that the path satisfies the process request.

On the other hand, when the routing module 2038 confirms that there is no process requirement (No in step S302), the routing module 2038 adopts the piping path tentatively set in step S125 as a regular piping path (step S404).

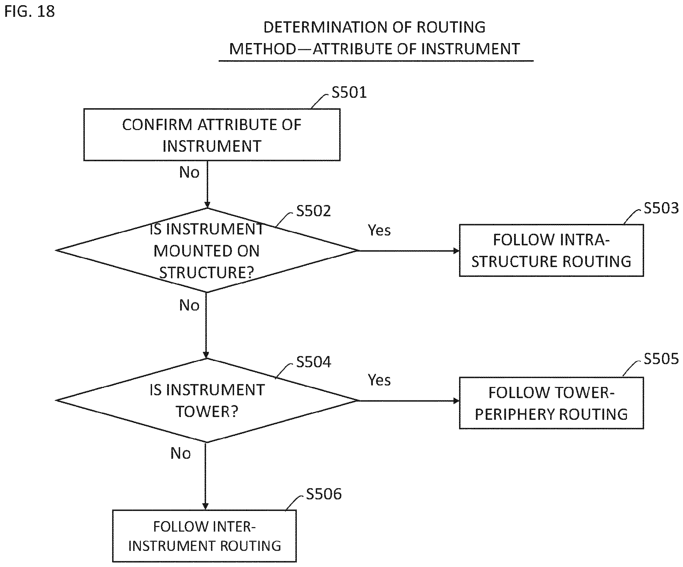

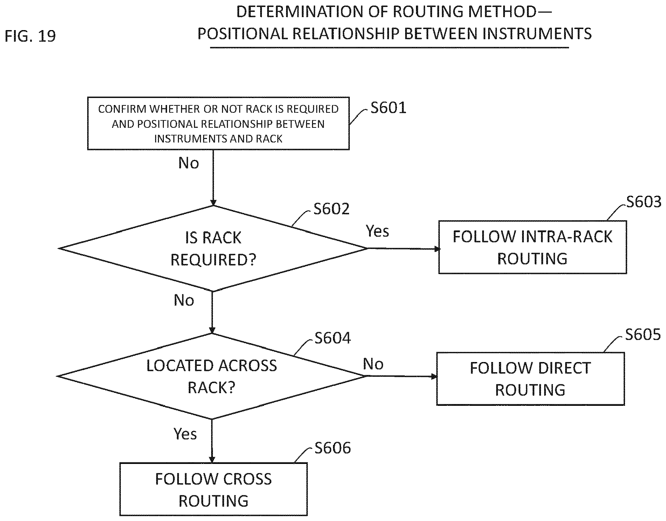

Next, as shown in FIG. 15, the routing module 2038 determines a routing method (step S1274, step S1275). This process of determining a routing method will be described in detail with reference to FIG. 18 and FIG. 19. FIG. 18 and FIG. 19 are diagrams illustrating a method for determining a routing method by the routing module 2038. Of the figures, FIG. 18 shows a process of determining a routing method based on an attribute of an instrument.

As shown in FIG. 18, the routing module 2038 confirms the attribute of the instrument to be connected by the piping. The routing module 2038 first confirms whether or not the instrument is mounted on the structure (step S501). Specifically, the design parameter DB 2024 is checked to confirm whether or not the positions of the start point and the end point are on the structure.

Here, when the instrument is mounted on the structure (Yes in step S502), the routing module 2038 adopts intra-structure routing as the routing method (step S503). Details of the intra-structure routing will be described later.

On the other hand, when the instrument is not mounted on the structure (No in step S502), the routing module 2038 confirms whether or not the instrument is a tower (step S504). Here, the tower (fourth object) refers to a cylindrical structure erected along the height direction, such as a distillation tower.

When the instrument is a tower (Yes in step S504), the routing module 2038 adopts tower-periphery routing as the routing method (step S505). Details of the tower-periphery routing will be described later.

On the other hand, when the instrument is not a tower (No in step S504), the routing module 2038 adopts inter-instrument routing as the routing method (step S506). Details of the inter-instrument routing will be described later.

Next, among the methods for determining a routing method, a method for selecting a routing method based on the positional relationship between instruments will be described with reference to FIG. 19. FIG. 19 is a diagram showing a process of determining a routing method based on the positional relationship between instruments.

First, the routing module 2038 confirms whether or not a rack is required and the positional relationship between the instruments and the rack (step S601). When the instruments require a rack (Yes in step S602), the routing module 2038 adopts intra-rack routing (step S603). Details of the intra-rack routing will be described later.

On the other hand, when the instruments do not require a rack (No in step S602), the routing module 2038 confirms the positional relationship between the rack and the instruments (step S604). Here, the longitudinal direction of the rack is set, and when the longitudinal direction of the rack and the line connecting the instruments are orthogonal to each other, the two instruments are recognized as being located across the rack.

When the instruments are not located across the rack (No in step S604), the routing module 2038 adopts direct routing (step S605). Details of the direct routing will be described later.

On the other hand, when the instruments are located across the rack (Yes in step S604), the routing module 2038 adopts cross routing (step S606). Details of the cross routing will be described later.

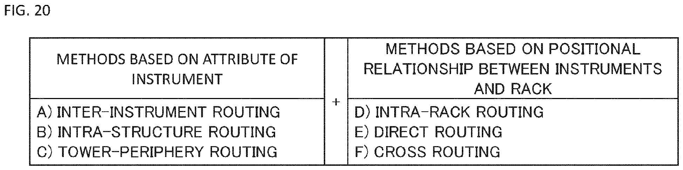

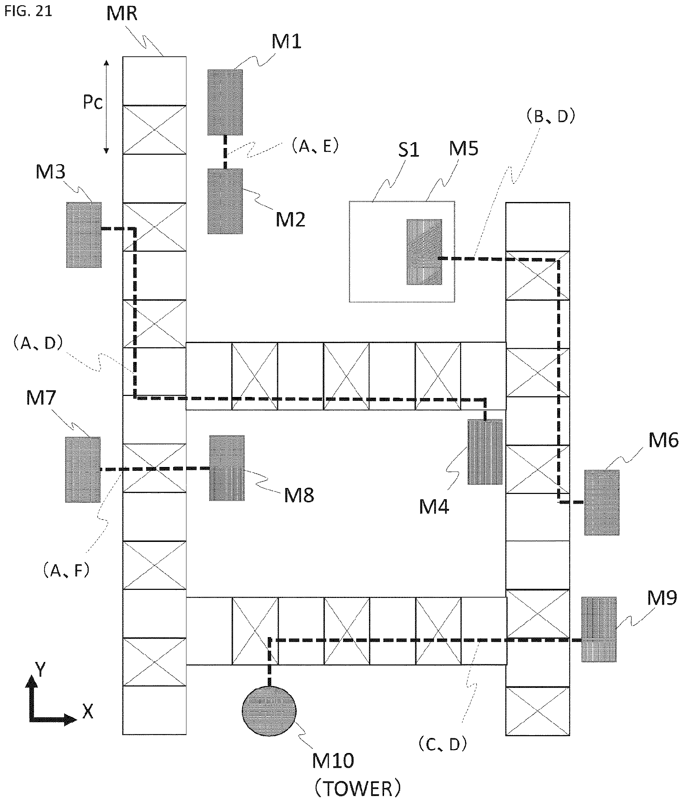

Next, various routing methods will be described. FIG. 20 is a diagram illustrating various routing methods. FIG. 21 is a diagram showing a state of various instruments routed by various routing methods.

As shown in FIG. 20, the routing methods are roughly divided into distinctions based on the attributes of the instruments and distinctions based on the positional relationship between the instruments and the rack. Among them, the distinctions based on the attributes of the instruments mainly relate to the routing methods around the instruments when connecting the instruments to the piping.

On the other hand, the distinctions based on the positional relationship between the instruments and the rack relate to the routing methods performed when determining a path between the instruments. That is, the routing module 2038 selects one routing method each from those on the left side and those on the right side of FIG. 20 in accordance with the above-described determination flow and performs routing.

First, as a method based on the attribute of the instrument, "A) Inter-instrument Routing" is a general routing method, and is a routing method in which piping is connected to nozzles set as the start point and end point of the instruments.

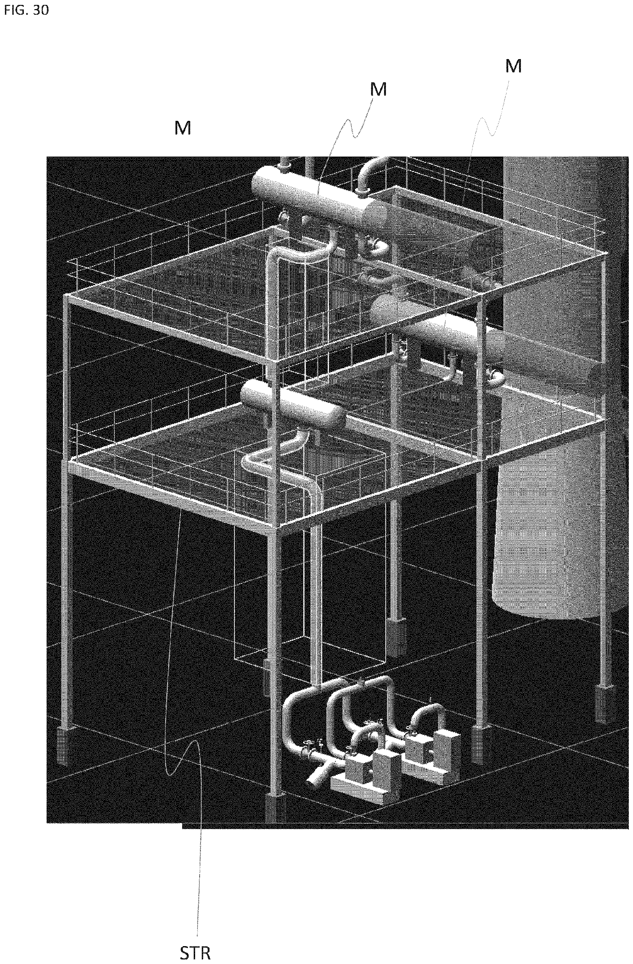

Next, of the methods based on the attributes of the instruments, "B) Intra-structure Routing" is a routing method adopted when any of the instruments connected by the piping is mounted on the structure. Here, the structure (third object) refers to a structure on which a plurality of instruments are mounted in a plant, as shown in FIG. 30. FIG. 30 is a diagram showing an appearance of the structure in a three-dimensional space. The structure STR shown in FIG. 30 has a two-layer structure, and an instrument M is arranged in each layer. Examples of the instrument M include a heat exchanger and a pump.

In this routing method, direct routing is not performed on the nozzles of the structure, but piping is routed in consideration of the space required for installation of a support member to be laid in the structure. The support member is a member for supporting the piping, and is composed of, for example, a channel steel material, an angle steel material, or the like. The support member is laid to support piping in the structure. The size of the support member is stored in the instrument database 2021 in advance. Although the support member is not modeled in the virtual space, piping is routed in consideration of the size of the support member.

In "C) Tower-Periphery Routing" shown in FIG. 20, in the process of extending piping toward the start and end points of the tower, the piping is routed so that the piping extends in the height direction along the outer peripheral surface of the tower. Here, the start and end points are a concept including the start point and the end point. FIG. 31 is a diagram showing an appearance of the tower in a three-dimensional space. As shown in FIG. 31, the piping Pi extends in the height direction along the outer peripheral surface of the tower T. The piping Pi is routed in consideration of a space required for installation of a piping support member laid from the outer peripheral surface of the tower T. That is, the piping Pi is routed so as to extend in the height direction along the outer peripheral surface of the tower at a position spaced radially outward by the size of the support member from the outer peripheral surface of the tower T.

Next, of the methods based on the positional relationship between the instruments and the rack, "D) Intra-rack Routing" is a general routing method, and the routing is performed so that the piping is laid in the rack so that the piping extends along the longitudinal direction of the piping.

Next, in "E) Direct Routing" shown in FIG. 19, routing is performed such that the instruments are directly connected to each other by piping without using a rack. That is, when the positional relationship between the instruments connected by piping satisfies a predetermined positional relationship, the piping is routed directly to the instruments without passing through the rack.

In "F) Cross Routing", routing of piping is performed so that the piping crosses the rack arranged between the two instruments. That is, in the case where the piping is directly connected to the instruments, when a rack is arranged between the instruments, the piping is routed directly to the instruments so as to cross the rack.

As shown in FIG. 21, "A) Inter-instrument Routing" and "E) Direct Routing" are adopted for piping connecting an instrument M1 and an instrument M2. This is because the distance between the instrument M1 and the instrument M2 is shorter than half of one pitch Pc of the rack.

Further, "A) Inter-instrument Routing" and "D) Intra-rack Routing" are adopted for piping connecting an instrument M3 and an instrument M4.

Further, "B) Intra-structure Routing" and "D) Intra-rack Routing" are adopted for piping connecting an instrument M5 and an instrument M6. This is because the instrument M5 is mounted on the structure S1.

Further, "A) Inter-instrument Routing" and "F) Cross Routing" are adopted for piping connecting an instrument M7 and an instrument M8. This is because the instrument M7 and the instrument M8 are located across a main rack MR.

Further, "C) Tower-periphery Routing" and "D) Intra-rack Routing" are adopted for piping connecting an instrument M9 and an instrument M10.

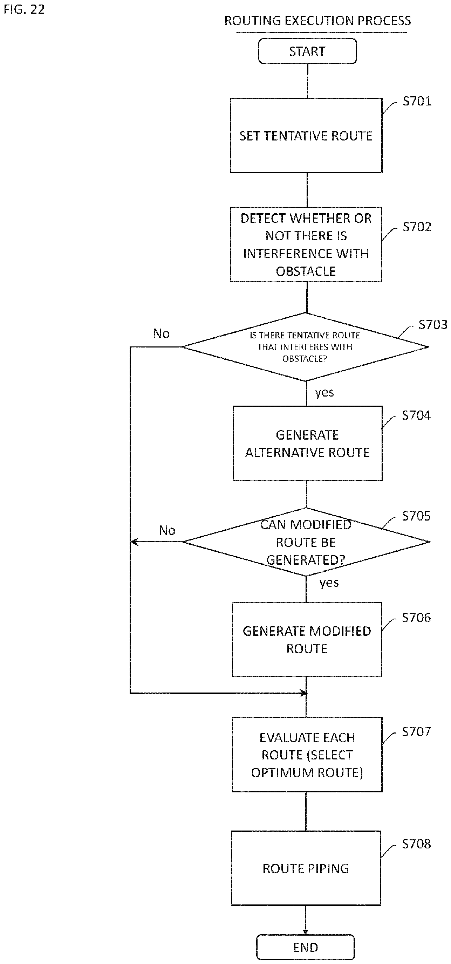

As shown in FIG. 15, the routing module 2038 then performs a routing execution process using the selected routing method (step S1276). In piping routing, routing is executed between two selected instruments by using the position of an identified path, information on the positions of the start point and the end point input as piping design parameters, and other design parameters such as a process requirement. The routing execution process will be described with reference to FIG. 22.

FIG. 22 is a diagram showing the routing execution process.

As shown in FIG. 22, the routing module 2038 first sets a tentative route connecting the start point and the end point (step S701). At this time, a route connecting the start point and the end point with the shortest path is set along the coordinate axes of the virtual space by using the position of the path identified by the end of the previous process, information on the positions of the start point and the end point input as piping design parameters, and other design parameters such as a process requirement. This shortest route is the tentative route. At this time, the routing module 2038 sets a plurality of tentative routes connecting the start point and the end point.

After step S701, the routing module 2038 deletes whether or not there is interference with an obstacle for the tentative route (step S702). Specifically, the routing module confirms whether or not other already routed piping or other already arranged instruments are arranged on the path of the tentative route in the virtual space. When a plurality of tentative routes are set, whether or not there is interference with an obstacle is detected for each of the plurality of tentative routes.

In step S702, when there is no tentative route that does not interfere with an obstacle (No in step S703), the routing module 2038 executes a step of evaluating each route (S707). This process will be described later.

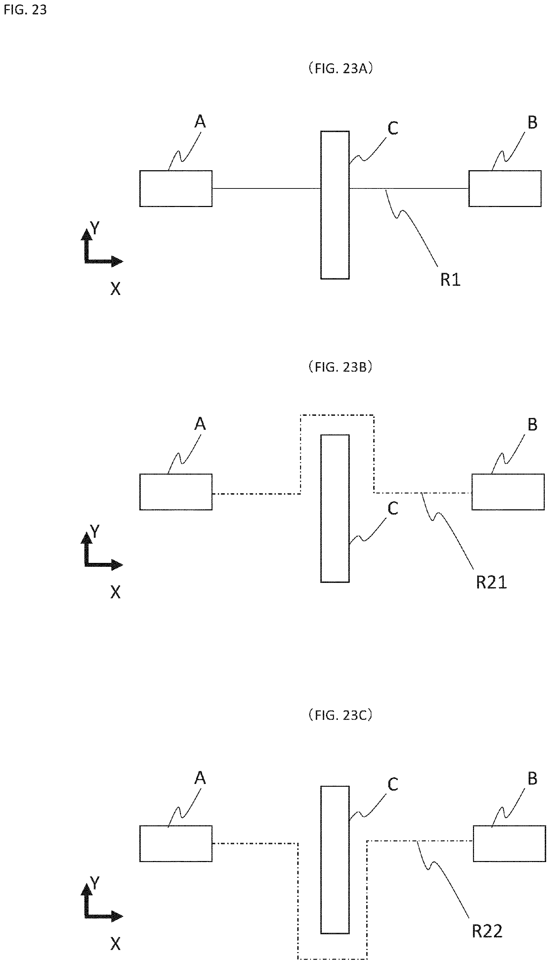

On the other hand, in step S702, when interference with an obstacle is confirmed (Yes in step S703), the routing module 2038 changes the tentative route for which interference has been confirmed, and generates an alternative route that bypasses the obstacle. When the alternative route is generated, the alternative route is generated along the coordinate axes of the virtual space so as to bypass the obstacle. The method for generating an alternative route at this time will be described in detail with reference to FIG. 23. FIG. 23 is a diagram illustrating alternative routes generated by the routing module.

As shown in FIG. 23A, when there is an obstacle C between a start point A and an end point B, the obstacle C is located on a tentative route R1 created by the routing module 2038.

In this case, the routing module 2038 generates a plurality of alternative routes, such as an alternative route R21 shown in FIG. 23B and an alternative route R22 shown in FIG. 23C. At this time, detour routes in the vertical direction Z, which are not shown, are also created. In this way, the routing module 2038 generates a plurality of alternative routes that bypass the obstacle C.

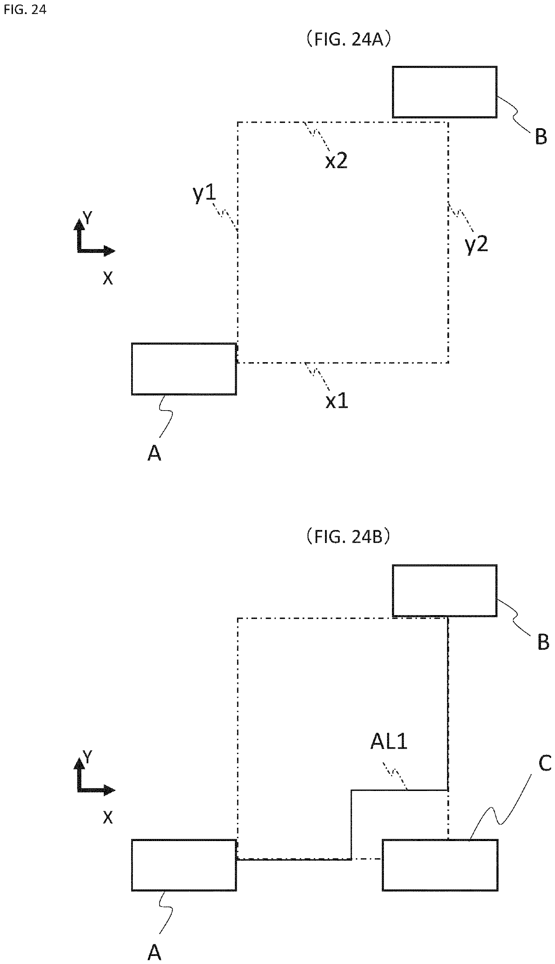

Next, a case of two-dimensional paths will be described with reference to FIG. 24. FIG. 24A is a diagram showing an example in which the start point A and the end point B are two-dimensionally separated from each other. FIG. 24B is a diagram showing an example in which there is an obstacle C between the start point A and the end point B.

As shown in FIG. 24A, two types of paths, i.e., a path (x1, y2) and a path (y1, x2), are set as tentative routes connecting the start point A and the end point B.

As shown in FIG. 24B, when there is an obstacle C in this case, the routing module 2038 detects that the path (x1, y2), which is a tentative route, interferes with the obstacle C. Then, the routing module 2038 changes the path (x1, y2), for which interference has been confirmed, and generates an alternative route AL1.

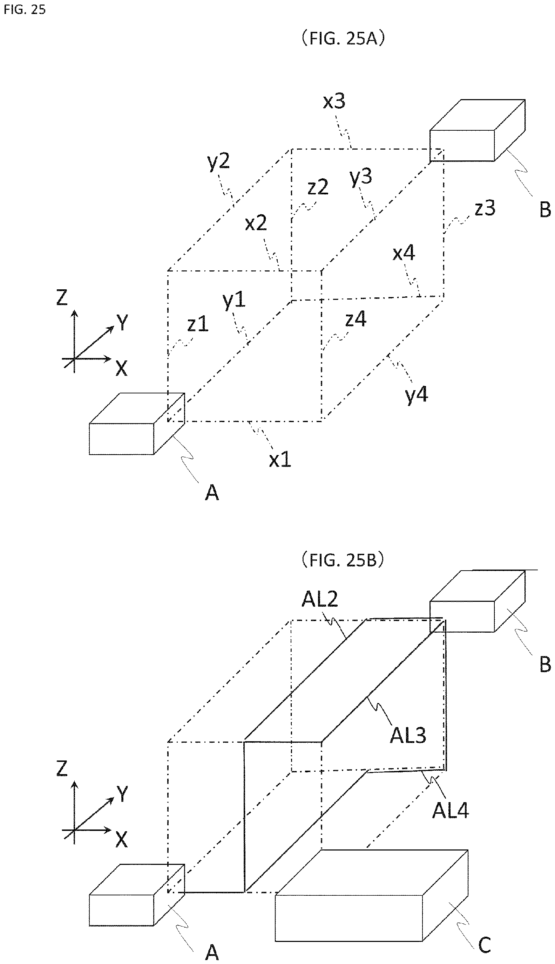

Next, a case of three-dimensional paths will be described with reference to FIG. 25. FIG. 25A is a diagram showing an example in which the start point A and the end point B are three-dimensionally separated from each other. FIG. 25B is a diagram showing an example in which there is an obstacle C between the start point A and the end point B.

As shown in FIG. 25B, six types of paths, i.e., a path (x1, y4, z3), a path (x1, z4, y3), a path (y1, x4, z3), a path (y1, z2, x3), a path (z1, x2, y3), and a path (z 1, y2, x3) are set as tentative routes connecting the start point A and the end point B.

As shown in FIG. 25B, when there is an obstacle C in this case, the routing module 2038 detects that the path (x1, y4, z3) and the path (x1, z4, y3), which are tentative routes, interfere with the obstacle C.

Then, the routing module 2038 changes the path (x1, y4, z3) and the path (x1, z4, y3), for which the interference has been confirmed, and generates alternative routes AL2 to AL4. As described above, in the case of three-dimensional paths, the routing module 2038 generates a plurality of routes that can be generated as alternative routes.

When generating an alternative route, the routing module 2038 generates the alternative route so as to satisfy a constraint condition regarding the change in height through the path. The constraint condition regarding the change in height through the path is an item managed as "Process Requirement" in the design parameter database 2024.

The routing module 2038 generates an alternative route using an elbow whose size is registered in advance. Information such as sizes and materials of various types of elbows is stored in the piping information database 2023.

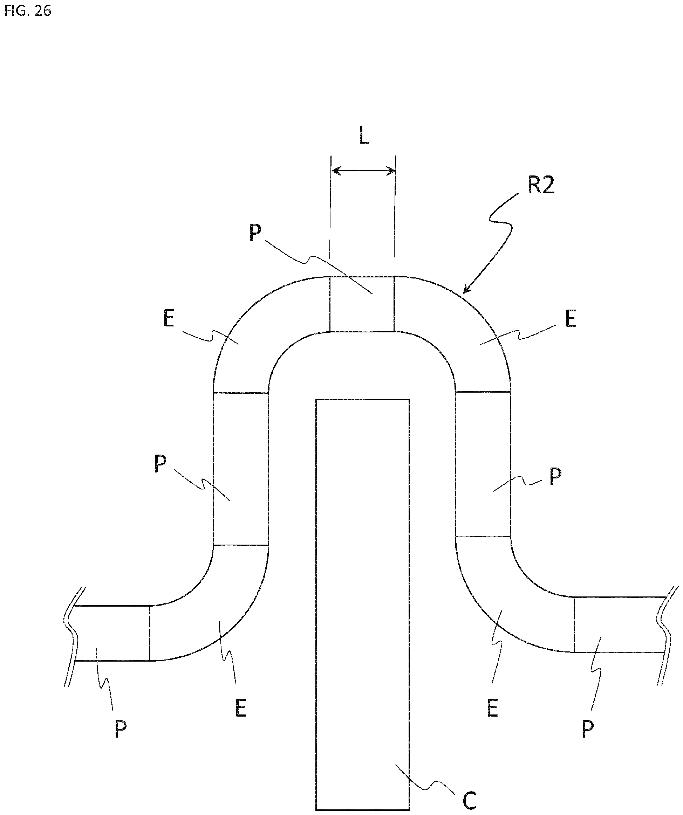

When the routing module 2038 applies a new straight pipe to the alternative route, the length of the straight pipe is selected so as to satisfy the minimum distance between welds at both ends of the straight pipe. This point will be described with reference to FIG. 26. FIG. 26 is an enlarged view of the alternative route.

The minimum distance between welds refers to the minimum distance that should be ensured between welded portions when materials are joined together by welding. For example, when elbows are joined to both ends of a straight pipe, the length of the straight pipe is required to be longer than the minimum distance between welds.

As shown in FIG. 26, as the alternative route R2, an alternative route is generated so that the shortest length L of the straight pipe P becomes larger than the preset minimum distance between welds. In this case, the size and position of the elbow E are adjusted so as to satisfy this condition.

As shown in FIG. 22, after step S704, the routing module 2038 determines whether or not it is possible to modify the alternative route to create a modified route with a smaller number of bends and a shorter path length than the alternative route (step S705).

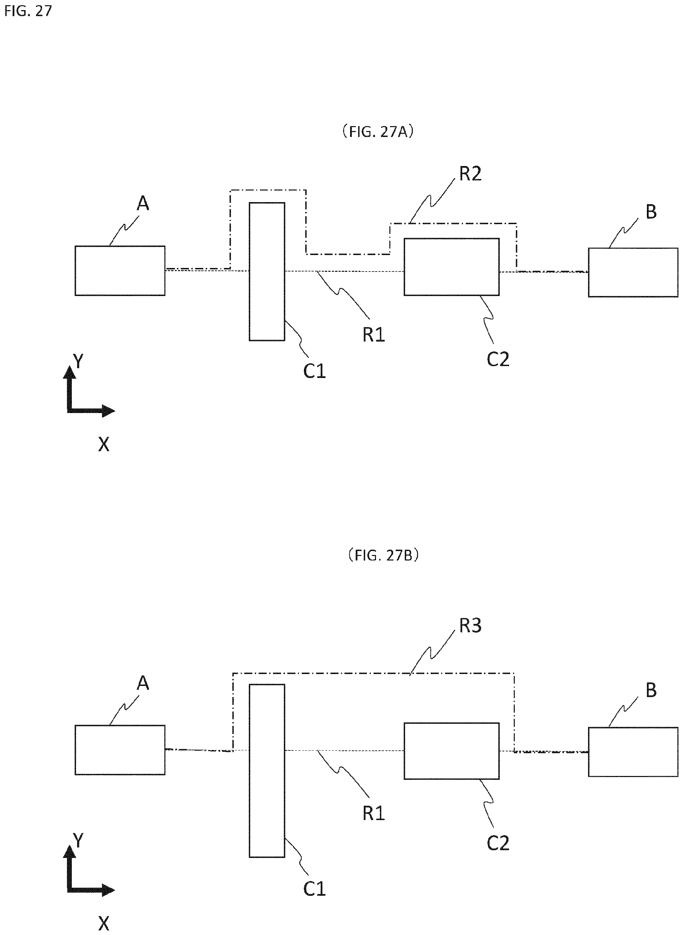

The modified route will be described with reference to FIG. 27. FIG. 27 is a diagram illustrating a modified route generated by the routing module 2086.

As shown in FIG. 27A, when a plurality of obstacles C1 and C2 are arranged at intervals, a route bypassing each of the obstacles C1 and C2 is generated as one alternative route R2. In this case, the number of bends is increased by bypassing the respective obstacles.

Then, as shown in FIG. 27B, a modified route R3 can be generated for the alternative route R2. Since the modified route R3 bypasses the entire area where the obstacle C1 and the obstacle C2 are located, the modified route R3 has a fewer bends and a shorter path length than the alternative route R2. In this case, the routing module 2038 generates a modified route R3 for the alternative route R2.

When it is determined in step S705 shown in FIG. 22 that a modified route cannot be created (No in step S705), the routing module 2038 executes a step of evaluating each route (S707). This process will be described later.

When it is determined in step S705 that a modified route can be created (Yes in step S705), the routing module 2038 generates a modified route for the alternative route (step S706). The modified route is generated for each of the plurality of alternative routes. A plurality of modified routes may be generated for one alternative route.

The routing module 2038 generates a modified route using an elbow whose size is registered in advance.

When the routing module 2038 applies a new straight pipe to the modified route, the length of the straight pipe is selected so as to satisfy the minimum distance between welds at both ends of the straight pipe.

After step S705, the routing module 2038 selects the optimum route with the lowest cost from the routes generated so far, i.e., from all of the tentative routes, alternative routes, and modified routes (step S707). The cost evaluation is calculated such that shorter path lengths are rated higher.

When selecting an optimum route, the routing module 2038 may select in advance routes that satisfy a constraint condition related to a change in height through the path, and select an optimum route from the selected routes.

The optimum route is selected by evaluating a plurality of parameters, that is, the path length, the number of bends, and the amount of change in height through the path. For each route, the shorter the path length, the higher the rating, and when the path length is the same, the path with fewer bends is rated higher. In addition, for each route, when the number of bends is the same, the route with the smallest change in height through the path is highly rated.

In the present embodiment, the routing module 2038 executes the above-described processing for avoiding interference outside the rack. Specifically, the processing from the process of detecting interference to the process of selecting the optimum route is applied to a portion of the piping to be routed which is arranged outside the beams of the rack. The beams of the rack refer to members extending in the horizontal direction among members constituting the rack. That is, the space between the lowermost beam and the ground is defined as the outside of the beams of the rack.

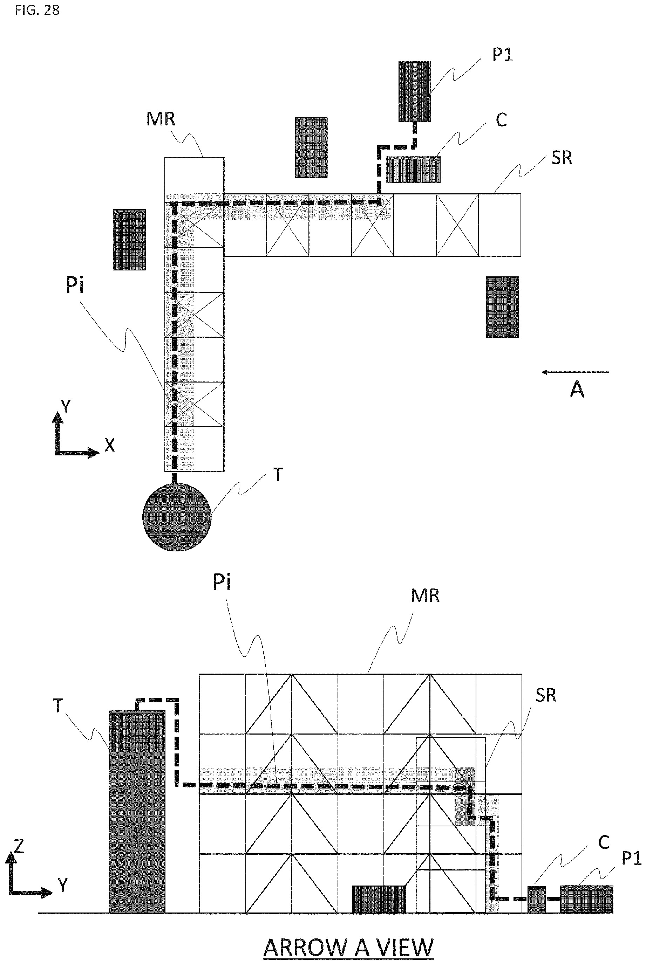

An operation screen of the terminal apparatus 10 when routing of the piping has been performed in this manner will be described with reference to FIG. 28.

FIG. 28 is a diagram showing an example operation screen of the terminal apparatus 10 when piping routing has been performed. As shown in FIG. 28, when piping routing is performed, piping Pi connecting the tower T and the pump P1 is displayed. In this state, the piping is routed so as to avoid another instrument which is the obstacle C.

As a result, the processing for routing piping by the routing system is completed.

Next, a routing method in which other design parameters are taken into consideration will be described. Other design parameters are mainly "Fluid State", "Fluid Temperature", "Type and Thickness of Heat Insulating Material", "Priority", "Piping Diameter", "Process Requirement", and "Group". These pieces of information are input when piping design parameters are defined, and are stored in the design parameter DB 2024. Based on the designated design parameters, the routing module 2038 performs routing in accordance with the pre-defined constraints according to the type of piping to be routed. These pieces of information may be input in step S114 in which design parameters are input, or may be additionally input after step S115 in which a path is displayed once.

The "Fluid State" is information that specifies the connection direction at the branch portion of the piping. In general, when the fluid is gas (V) or a mixture of liquid and gas (VL), the connection portion is set upward so that branch piping is drawn from the top of the main piping. On the other hand, when the fluid is liquid (L), the connection portion is set downward so that the branch piping is drawn out from the bottom of the main piping. In this manner, the routing module 2038 adjusts the vertical direction of the piping from the rack to the start and end points of the instrument depending on the type of the piping to be routed.

The "Fluid Temperature" is information specifying the distance between pipings adjacent to each other. Routing is performed so that pipings with fluids having similar temperatures are adjacent to each other.

The "Type and Thickness of Heat Insulating Material" is information for setting a substantial diameter of the piping.

The "Priority" is information specifying priority in routing. The routing module 2038 determines the order of routing in relation to the other pipings in accordance with the priority set in advance for the piping to be routed.

The "Piping Diameter" is information for specifying priority. The initial value of priority is set higher for pipings with larger diameters than for pipings with smaller diameters.

The "Process Requirement" is a constraint condition related to a change in height (shape of piping) in the path from the start point to the end point. The process requirement includes "Gravity Flow", "No Pockets", "No Liquid Pocket", "No Vapor Pocket", and the like.

The "Gravity Flow" refers to a path whose middle part does not matter as long as the start point is higher than the end point.

The "No Pockets" refers to a path with no Low Pockets and High Pockets between the start point and the end point. The "Low Pockets" means that there is vertical piping in the upward direction after vertical piping in the downward direction with respect to the flow direction. The "High Pockets" means that there is vertical piping in the downward direction after vertical piping in the upward direction with respect to the flow direction.

The "No Liquid Pocket" refers to a path without Low Pockets, i.e., a path without liquid pools.

The "No Vapor Pocket" refers to a path without High Pockets, i.e., a path without gas pockets.

The process requirement may include conditions other than the aforementioned conditions.

The routing module 2038 determines the connection structure of piping based on the input process requirement.

The "Group" specifies the position of the piping to be routed so that the pipings that constitute the same system and should be close to each other are arranged together. The routing module 2038 routes a plurality of pipings constituting the same system so as to be adjacent to each other.

The "Head Clearance" is information specifying the height of the lowest part of the piping from the ground. For example, it is input when ensuring a sufficient height above a passage for people to pass. The routing module 2038 performs routing of piping so as to satisfy the head clearance.

As described above, according to the piping routing system 1 of the present embodiment, the routing module 2086 detects whether or not there is an obstacle for the set tentative route. When interference is confirmed, a plurality of alternative routes are generated, and an optimum route is selected from the plurality of alternative routes. This makes it possible to route piping while avoiding interference between pipings through an extremely simple operation.

In addition, the routing module 2086 modifies each of the generated alternative routes to generate a modified route with a smaller number of bends and a shorter path length than the alternative route. Then, the routing module 2086 evaluates the cost calculated based on the path length for the plurality of alternative routes and modified routes, and selects the optimum route. As a result, it is possible not only to avoid each obstacle but also to select an optimum route with a smaller number of bends and a shorter route length in the entire path.

When the path length is the same, the cost of the routing path is evaluated based on the number of bends, and the route with a smaller number of bends is rated higher. Therefore, when the path length is the same, a route with a lower cost can be selected from the viewpoint of the number of bends.

When the shortest routes have the same number of bends, the routes are evaluated based on the amount of change in height through the path, and the route with the least amount of change in height through the path is highly rated. Therefore, when the path length and the number of bends are the same, a route with a more stable operation environment can be selected.

In addition, the routing module 2086 generates an alternative route so as to satisfy the constraint condition regarding the change in height through the path. This makes it possible to perform routing that satisfies various constraints set in accordance with the properties of the flowing fluid.

Alternatively, the routing module 2086 selects in advance routes that satisfy the constraint conditions, and selects an optimum route from the selected routes. This reduces the processing load by preliminarily excluding routes that do not satisfy the constraint conditions from candidates.

Alternatively, the routing module 2086 generates alternate routes so as to satisfy the minimum distance between welds at both ends of a straight pipe. Therefore, a route that can actually be constructed can be routed.

Further, the routing module executes processing for avoiding interference outside the beams of the rack. This reduces the processing load.

Further, after a designation of a layer of a rack in which piping is to be laid is received and a piping path indicating a path in a space in which piping is to be arranged is set, piping is routed between two instruments selected from among a plurality of instruments arranged in the virtual space. For this reason, a routing route is determined after the layer position of the rack is ascertained.

As a result, it is possible to consider the routing work of piping connecting various instruments for each layer of the rack.

In addition, the routing module 2038 confirms the distance orthogonal to the longitudinal direction of each rack with respect to each of the start point and the end point, identifies the rack closest to the start point and the end point, and sets a piping path. Therefore, the optimum rack to be used can be accurately identified in accordance with the positions of the start point and the end point.

In addition, the server 20 displays an edit screen showing the types of piping to be arranged for each layer of the rack. Therefore, the user can easily edit the layers of the rack.

In addition, on the edit screen, for each layer of the rack, the occupancy ratio for each type of piping arranged is displayed. Therefore, it is possible for the user to confirm the occupancy ratio of each type of piping to be arranged in the layer and accurately ascertain which and how much piping is to be arranged, which contributes to piping design.

In addition, the routing module 2038 performs routing in accordance with predetermined constraints depending on the type of piping to be routed. Therefore, by inputting various constraints, it is possible to respond to various requirements to be considered in routing.

In addition, the routing module 2038 adjusts the vertical direction of the piping from the rack to the start and end points of the instrument depending on the state of the fluid that flows in the piping to be routed. Therefore, the routing of piping can be appropriately performed in consideration of the state of the fluid.

In addition, the routing module 2038 determines the connection structure of piping based on the input constraint conditions regarding the positional relationship in the vertical direction in the path from the start point to the end point. This allows for routing of useful piping that is in line with the actual practice of piping routing.

Further, the routing module 2038 determines the order of routing in relation to the other pipings in accordance with the priority set in advance for the piping to be routed. Therefore, user convenience can be ensured by prioritizing the routing of high priority piping.

Further, the initial value of priority is set higher for pipings with larger diameters than for pipings with smaller diameters. This allows for a design with a reduced construction cost.

Further, the routing module 2038 routes a plurality of pipings constituting the same system so as to be adjacent to each other. Therefore, user convenience can be ensured.

Further, when the instrument is mounted on the structure, the routing module 2038 performs routing of piping in consideration of a space required for installation of a support member to be laid in the structure. This allows routing in line with the instrument to be mounted on the structure.

Further, when the instrument is a tower, the routing module 2038 performs routing of piping so that the piping extends in the height direction along the outer peripheral surface of the tower in the process of extending the piping toward the start and end points of the tower. Therefore, by supporting the piping connected to the tower by the outer peripheral surface of the tower, the strength of the piping can be ensured while suppressing the amount of support for the piping.

Further, when the positional relationship between the instruments connected by the piping satisfies a predetermined positional relationship, the routing module 2038 directly routes the piping to the instruments without passing through a rack. This suppresses an unnecessary increase in the length of the piping and allowing for routing of the piping at a low cost.

Further, in the case of directly connecting the piping to the instruments, when a rack is arranged between the instruments, the routing module 2038 directly routes the piping to the instruments so as to cross the rack. This suppresses an unnecessary increase in the length of the piping and allowing for routing of the piping at a low cost.

In addition, the heights of the layers of the main rack are different from those of the subrack. Therefore, the piping can be connected from the main rack to the subrack while changing the height of the piping, and the structure of the connection portion of the piping extending from the main rack to the subrack can be simplified.

### (Modification)

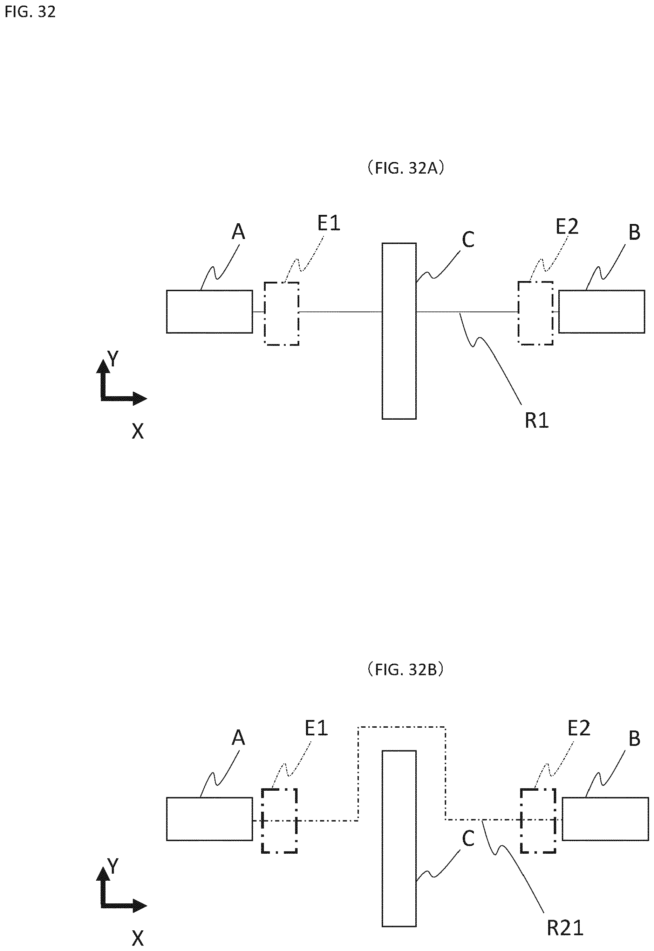

Next, with reference to FIG. 32 to FIG. 34, an exception to the above-described interference avoidance processing will be described as a modification. In this modification, objects that satisfy a predetermined condition among the objects that are obstacles arranged in the virtual space are excluded from interference avoidance targets as obstacles. Such exception processing for the interference avoidance will be described below. FIG. 32 is a diagram illustrating an alternative route according to the modification. Of FIG. 32, FIG. 32A is a diagram showing a state before an alternative route is created, and FIG. 32B is a diagram showing a state where an alternative route according to the modification has been created.

In the virtual space shown in FIG. 32A, between an object having a start point A and an object having an end point B, envelopes E1 and E2, which are objects that are not interference avoidance targets, and an instrument C (obstacle), which is an object that is an interference avoidance target, are arranged.

In this case, in generating an alternative route according to the modification, as shown in FIG. 32B, the routing module 2038 creates an alternative route R21 without regarding the envelopes E1 and E2 as interference avoidance targets. When generating a plurality of alternative routes, the routing module 2038 also generates alternative routes without regarding the envelopes E1 and E2 as interference avoidance targets.

Here, the envelope is a surface model that occupies a predetermined space area in the virtual space, and is arranged around the start point or the end point of an instrument (object) in consideration of workability of maintenance of the instrument, for example. The purpose of arranging the envelope in the virtual space is not only to maintain the instrument, but also to secure the place to arrange work machinery used for the work, secure an evaluation site and evacuation route for workers, secure a movement route for workers, and the like.

Then, for a tentative route connecting the start point and the end point located in the vicinity of an object indicating an envelope, the routing module 2038 generates an alternative route without regarding the envelope as an interference avoidance target.

On the other hand, for a tentative route connecting the start point and the end point not located in the vicinity of an object indicating an envelope, the routing module 2038 generates an alternative route while regarding the envelope as an interference avoidance target.

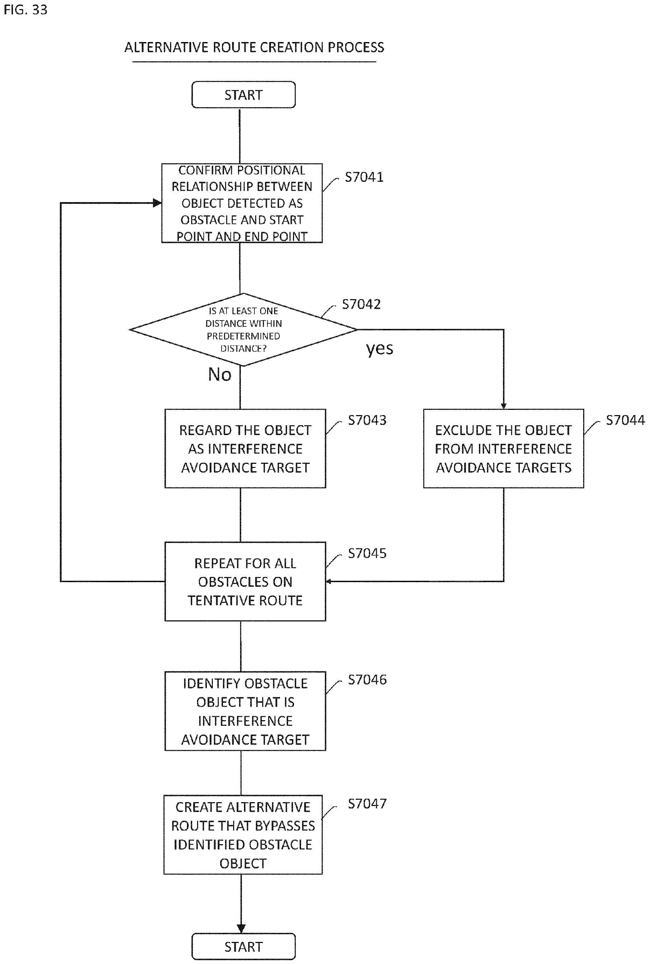

Such processing for creating an alternative route according to the modification will be described below. FIG. 33 is a diagram showing processing for creating an alternative route according to the modification. In this figure, the processing for creating an alternative route in FIG. 22 (step S704) will be described as further subdivided processes.

As shown in FIG. 33, in creating an alternative route according to the modification, the routing module 2038 first confirms the positional relationship between the object detected as an obstacle in the detection of whether or not there is interference with an obstacle in FIG. 22 (step S702) and the start and end points. (Step S7041)

Specifically, the routing module 2038 confirms the distance to the start point of the tentative route for each of a plurality of objects detected as obstacles to the tentative route. Further, the routing module 2038 confirms the distance to the end point of the tentative route for each object detected as an obstacle to the tentative route.

In step S7041, when both the distance to the start point of the tentative route and the distance to the end point of the tentative route are greater than the distance corresponding to a predetermined threshold value (No in step S7042), the routing module 2038 regards the object as an interference avoidance target (step S7043).

On the other hand, in step S7041, when at least one of the distance to the start point of the tentative route and the distance to the end point of the tentative route is within the distance corresponding to the predetermined threshold value (Yes in step S7042), the routing module 2038 determines that the object corresponds to an envelope arranged in the vicinity of the start point or the end point for a predetermined purpose, and excludes the object from the interference avoidance targets (step S7044).

After step S7033, the routing module 2038 repeats the determination of step S7041 for all the obstacles detected on the tentative route (step S7045).

After step S7034, the routing module 2038 similarly repeats the determination of step S7041 for all the obstacles detected on the tentative route (step S7045).

After step S7045, the routing module 2038 identifies obstacle objects which are objects that are interference avoidance targets among a plurality of objects detected as obstacles on the tentative route (step S7046).

After step S7046, the routing module 2038 regards the identified obstacle objects as interference avoidance targets, and generates an alternative route that avoids the obstacle objects (step S7047).

This completes the alternative route creation process according to the modification. As a result, as shown in FIG. 32B, an alternative route that does not avoid interference with envelopes located in the vicinity of the start point A or the end point B is created.

Thereafter, the routing module 2038 determines whether or not a modified route can be created as shown in FIG. 22 (step S705).

Here, the distance corresponding to the threshold value that is a criterion for the determination in step S7042 is, for example, a distance which allows the smallest elbow that can be used for the tentative route to join, which is set by a piping design parameter. The piping design parameter includes a specification value including the size of piping used for the tentative route, and is input in advance by the user when setting the tentative route.

Note that the threshold value used as a criterion for the determination can be set arbitrarily.

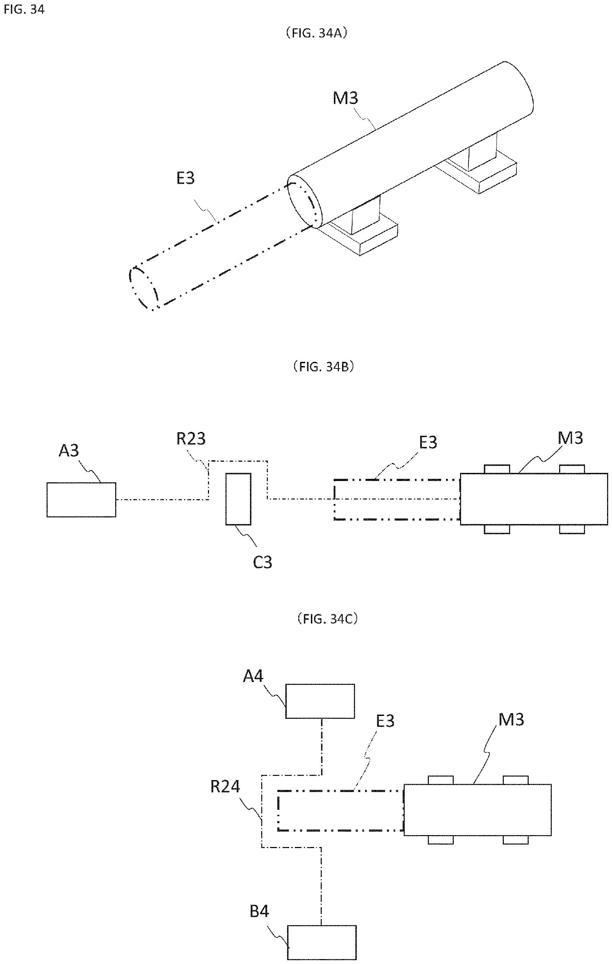

FIG. 34 is a diagram showing another example of the alternative route according to the modification.

As shown in FIG. 34A, the envelope may have a shape corresponding to the characteristics of the instrument. In the example shown, the envelope E3 has a shape corresponding to a cylinder accommodated in the heat exchanger M3. The envelope E3 is arranged in the virtual space in order to ensure a space for temporarily taking out the internal cylinder during maintenance of the heat exchanger M3.

In the example of FIG. 34B, an alternative route R23 connecting an object having a start point A3 and a heat exchanger M3 having an end point has been created. While avoiding the interference with the obstacle C3, the alternative route R23 passes through the envelope E3 without avoiding interference therewith. This is because, in this case, in the work of taking out the cylinder from the inside of the heat exchanger M3, the piping connected to the end point of the heat exchanger M3 is also removed; therefore, the alternative route does not need to avoid the envelope E3.

On the other hand, in the example of FIG. 34C, an alternative route R24 connecting an object having a start point A4 and an object having an end point B4 has been created. The alternate route R24 is routed to avoid the envelope E3. If piping connecting other instruments which are not in the vicinity of the envelope E3 passes through the inside of the envelope E3, the piping hinders the work of temporarily taking out the cylinder during maintenance of the heat exchanger M3. Therefore, in this example, an alternative route of piping connecting other instruments which are not in the vicinity of the envelope E3 is generated so as to avoid the envelope E3.

As described above, in the alternative route creating process according to the modification, an object arranged in the vicinity of the start point or the end point is determined to be an envelope that is not an interference avoidance target and is not regarded as an interference avoidance target. Therefore, for various purposes such as ensuring a work space or estimating a path length of a piping route at an initial stage of design, an alternative route that does not avoid interference can be created as appropriate, and piping routing processing with a higher degree of freedom can be realized.

### (Other Modifications)

In the above embodiment, the processing in which the routing module 2086 generates a modified route for the alternative route has been described, but the present disclosure is not limited to such an embodiment. The routing module 2086 does not have to generate a modified route.

In addition, when interference with an obstacle is not detected for all of the plurality of tentative routes, the routing module 2038 may select an optimum route from the plurality of tentative routes without generating alternative routes.

Although embodiments according to the present disclosure have been described above, these embodiments can be implemented in various other forms, and can be implemented with various omissions, replacements, and changes. These embodiments, variations, and those with omissions, replacements, and changes are included in the technical scope of the claims and their equivalents.

In addition, the order of the processes can be changed within a range that does not cause contradiction.

### EXPLANATION OF REFERENCE NUMERALS

1: piping routing system
10: terminal apparatus
20: server
80: network
130: operation reception unit
16 1: user information
22: communication IF
23: input/output IF
25: memory
26: storage
29: processor
201: communication unit
202: storage unit
203: control unit
301: communication unit
302: storage unit
303: control unit

## Claims

1. A program for designing a plant executed by a computer comprising a processor, the program causing the processor to execute:
a step of receiving, from a user, an operation to arrange a first object having a start point and a second object having an end point in a virtual space;
a step of setting a plurality of tentative routes connecting the start point and the end point along coordinate axes of the virtual space;
a step of detecting whether or not there is interference with an obstacle for each of the set tentative routes; and
a step of selecting an optimum route with a lowest cost from tentative routes for which no interference has been detected.

2. The program according to claim 1, further causing
the processor to execute:
a step of generating the alternative routes avoiding the obstacle along the coordinate axes of the virtual space by changing the tentative routes for which interference has been detected in the step of detecting whether or not there is interference, wherein
in the step of selecting the optimum route,
the optimum route with a lowest cost is selected from tentative routes for which no interference has been detected and the alternative routes.

3. The program according to claim 2, further causing
the processor to execute:
a step of modifying each of the generated alternative routes and generating a modified route with a smaller number of bends and a shorter path length than the alternative route, wherein
in the step of selecting the optimum route,
an optimum route with a lowest cost is selected from the tentative routes for which no interference has been detected, the alternative routes, and the modified routes.

4. The program according to any one of claims 1 to 3, wherein
a cost of each route when the optimum route is selected is calculated based on a path length of the route, and when the path length is the same, a route with a smaller number of bends is rated higher based on a number of bends.

5. The program according to claim 4, wherein with respect to the cost of each route when selecting the optimum route, when the path length and the number of bends are the same, a route with a smaller amount of change in height through the path is rated higher.

6. The program according to claim 5, wherein in the step of selecting the optimum route, routes satisfying a constraint condition are selected in advance, and the optimum route is selected from the selected routes.

7. The program according to any one of claims 1 to 6, wherein in the step of generating alternative routes, an elbow is used to generate the alternative routes.

8. The program according to any one of claims 1 to 7, wherein in the step of generating alternative routes, when a new straight pipe is applied to the alternative routes, the alternative routes are generated so as to satisfy a minimum distance between welds at both ends of the straight pipe.

9. The program according to any one of claims 2 to 8, wherein
in the step of generating the alternative routes,
an obstacle object which is an object to be avoided by the alternative routes is identified by excluding, from a plurality of obstacles for which interference with the tentative route has been detected, obstacles whose distances to positions of the start point and the end point are within a preset threshold value, and
the alternate routes that avoid the identified obstacle object are generated.

10. The program according to claim 9, further causing
the processor to execute:
a step of receiving, from a user, an input of a piping design parameter which is a specification value including a size of piping to be used for the tentative route, wherein
the threshold value refers to a distance which allows a minimum elbow usable for the tentative route to join, the distance being set by the piping design parameter.

11. A method for designing a plant executed by a computer comprising a processor, the method comprising the processor executing:
a step of receiving, from a user, an operation to arrange a first object having a start point and a second object having an end point in a virtual space;
a step of setting a tentative route connecting the start point and the end point along coordinate axes of the virtual space;
a step of detecting whether or not there is interference with an obstacle for the set tentative route; and
a step of selecting an optimum route with a lowest cost from a tentative route for which no interference has been detected.

12. A system comprising a control unit and configured to design a plant, wherein
the control unit comprises:
means for receiving, from a user, an operation to arrange a first object having a start point and a second object having an end point in a virtual space;
means for setting a tentative route connecting the start point and the end point along coordinate axes of the virtual space;
means for detecting whether or not there is interference with an obstacle for the set tentative route; and
means for selecting an optimum route with a lowest cost from a tentative route for which no interference has been detected.
